# EUROPEAN PATENT SPECIFICATION

(11) **EP 4 040 000 B1**
(45) Date of publication and mention of the grant of the patent: **06.03.2024**
(21) Application number: 22152014.1
(22) Date of filing: 18.01.2022
(51) Int. Cl.: F16D 43/18

(54) **CENTRIFUGAL CLUTCH, AND A STRADDLED VEHICLE HAVING THE CENTRIFUGAL CLUTCH**
ZENTRIFUGALKUPPLUNG UND GRÄTSCHSITZFAHRZEUG MIT DER ZENTRIFUGALKUPPLUNG
EMBRAYAGE CENTRIFUGE ET VÉHICULE À CALIFOURCHON COMPRENANT L'EMBRAYAGE CENTRIFUGE

(30) Priority: 04.02.2021 JP 2021016654
(43) Date of publication of application: 10.08.2022
(73) Proprietor: Yamaha Hatsudoki Kabushiki Kaisha, Iwata-shi, Shizuoka-ken 438-8501 (JP)
(72) Inventor: Ishizaki, Ryuta, Iwata-shi, Shizuoka 438-8501 (JP)
(74) Representative: Grünecker Patent- und Rechtsanwälte PartG mbB

(56) References cited:
- CN-A- 104 728 307
- CN-A- 107 314 056
- CN-Y- 2 697 384
- DE-A1- 19 848 624
- JP-A- S60 109 624

## Description

This invention relates to a centrifugal clutch according to the preamble of independent claim 1 and a straddled vehicle having the centrifugal clutch. Such a centrifugal clutch can be taken from the prior art document JP 2019-199947 A.

JP 2007-120601 A discloses a centrifugal clutch. The centrifugal clutch in this publication includes a drive plate, pivot members, clutch weights, and a clutch housing. The drive plate is rotatable about a first axis by engine's rotating power. The pivot members are supported by the drive plate. The clutch weights are supported by the pivot members. The clutch weights can rock about the pivot members. The clutch housing is located more outward radially of the first axis than the clutch weights. The clutch housing can contact the clutch weights.

When the drive plate is not in rotation, the clutch weights are located in an origin position. When the clutch weights are in the origin position, the clutch weights do not contact the clutch housing.

When the clutch weights in the origin position, the centrifugal clutch is in a disengaged state. In the disengaged state, the centrifugal clutch does not transmit rotating power from the drive plate to the clutch housing.

When the drive plate rotates about the first axis, the pivot members and clutch weights also rotate about the first axis, and the clutch weights are subjected to a centrifugal force. The centrifugal force acting on the clutch weights increases with an increase in the rotating speed of the drive plate. When the centrifugal force acting on the clutch weights exceeds a predetermined value, the clutch weights will further rock about the pivot members and will move outward radially of the first axis. With the clutch weights rocking about the pivot members, the clutch weights move from the origin position to a first contact position. When the clutch weights are located in the first contact position, the clutch weights contact the clutch housing.

When the clutch weights are located in the first contact position, and the frictional force between the clutch weights and clutch housing is sufficiently strong, the centrifugal clutch is in an engaged state. In the engaged state, the clutch housing rotates integrally with the drive plate. In the engaged state, the centrifugal clutch transmits rotating power from the drive plate to the clutch housing.

When the centrifugal clutch shifts from the disengaged state to the engaged state, the clutch weights tend to vibrate subtly. The shifting of the centrifugal clutch from the disengaged state to the engaged state occurs, for example, after the clutch weights reach the first contact position and before the frictional force between the clutch weights and clutch housing increases to the full. In this specification, the subtle vibration of the clutch weights will be called "juddering of the centrifugal clutch" as appropriate.

In order to restrain the juddering of the centrifugal clutch, the centrifugal clutch includes dampers. The dampers are supported by the drive plate. Each clutch weight has a recess. The recess can contact the damper. The recess extends in a direction in which the clutch weight rocks about the pivot member. In other words, as seen from the direction of the first axis, the recess extends along a first arc. The first arc is an imaginary line which, as seen from the direction of the first axis, passes through the damper, centering on the pivot member. When the clutch weight rocks about the pivot member, the recess slides relative to the damper, generating a frictional force between the damper and clutch weight. The frictional force suppresses vibration of the clutch weight.

JP 2019-199947 A discloses a centrifugal clutch. The centrifugal clutch in JP 2019-199947 A includes elements similar to those of the centrifugal clutch in JP 2007-120601 A. Specifically, the centrifugal clutch of JP 2019-199947 A also includes a drive plate, pivot members, clutch weights, a clutch housing, and dampers. When the clutch weights rock about the pivot members, the clutch weights can move from an origin position to a first contact position.

In JP 2019-199947 A, the clutch weights are movable to a second contact position, besides the origin position and the first contact position. Specifically, each clutch weight has a bore for inserting a pivot member. The bore is a long hole extending circumferentially of the first axis. When the clutch weight reaches the first contact position, the clutch weight receives a reaction force from the clutch housing. The reaction force moves the clutch weight about the first axis relative to the pivot member. Specifically, the clutch weight moves relative to the pivot member in a direction opposite to the direction of rotation of the drive plate. When the clutch weight moves circumferentially of the first axis relative to the pivot member, the clutch weight moves from the first contact position to the second contact position. When the clutch weight moves from the first contact position to the second contact position, the clutch weight slides relative to the clutch housing. Also when the clutch weight is located in the second contact position, the clutch weight contacts the clutch housing.

In JP 2019-199947 A, the centrifugal clutch further includes cams. The cams are supported by the drive plate. Each clutch weight has a driven wall which can contact the cam. When the clutch weight moves from the first contact position to the second contact position, the cam pushes the driven wall radially outward of the first axis. The clutch weight is forced on the clutch housing by pressure of centrifugal force and the cam. The frictional force between the clutch weight and clutch housing becomes stronger. Thus, the centrifugal clutch can easily maintain an engaged state by assistance of the cams.

The centrifugal clutch may not be capable of fully restraining the juddering of the centrifugal clutch even with the dampers. Further, even when the centrifugal clutch has the cams in addition to the dampers, the juddering of the centrifugal clutch may not be fully suppressed.

Then, a review has been made for further suppressing the subtle vibration of clutch weights.

It is an object of the present invention to provide a centrifugal clutch which can effectively restrain the juddering of the centrifugal clutch, and a straddled vehicle having the centrifugal clutch. According to the present invention said object is solved by centrifugal clutch having the features of the independent claim 1. Preferred embodiments are laid down in the dependent claims.

Accordingly, it is provided the following construction.

A centrifugal clutch comprising:
a drive plate rotatable about a first axis;
a pivot member supported by the drive plate;
a clutch weight supported by the pivot member to be rockable about the pivot member;
a clutch housing located radially outward of the first axis relative to the clutch weight to be capable of contacting the clutch weight; and
a damper supported by the drive plate;
wherein the clutch weight has a recess capable of contacting the damper; and
as seen from the direction of the first axis, the recess crosses a first arc centering on the pivot member and passing through the damper.

The centrifugal clutch includes a drive plate, a pivot member, and a clutch weight. The drive plate is rotatable about a first axis. The first axis is an imaginary straight line. The pivot member is supported by the drive plate. The clutch weight is supported by the pivot member. The clutch weight can rock about the pivot member. Consequently, when the drive plate rotates about the first axis, the pivot member and clutch weight also rotate about the first axis, and the clutch weight receives a centrifugal force. The centrifugal force acting on the clutch weight causes the clutch weight to further rock about the pivot member, and move radially outward of the firs axis.

The centrifugal clutch includes a clutch housing. The clutch housing is located radially outward of the first axis relative to the clutch weight. The clutch housing can contact the clutch weight. Consequently, when the clutch weight does not move radially outward of the first axis, the clutch weight does not contact the clutch housing. When the clutch weight does not contact the clutch housing, the centrifugal clutch does not transmit rotating power from the drive plate to the clutch housing. On the other hand, when the clutch weight moves radially outward of the first axis, the clutch weight contacts the clutch housing. When the clutch weight contacts the clutch housing with a sufficient frictional force, the centrifugal clutch transmits the rotating power from the drive plate to the clutch housing.

The centrifugal clutch includes a damper. The damper is supported by the drive plate. The clutch weight has a recess. The recess can contact the damper. The first arc is an imaginary line which, as seen from the direction of the first axis, passes along the damper, centering on the pivot member. The phrase "as seen from the direction of the first axis" is synonymous with "as seen from the first axis". The first arc corresponds to a direction in which the clutch weight rocks about the pivot member. The direction in which the clutch weight rocks about the pivot member will be called rocking direction of the clutch weight. As seen from the direction of the first axis, the recess crosses the first arc. Therefore, when the clutch weight rocks about the pivot member, the recess can compress at least part of the damper. When the clutch weight rocks about the pivot member, the damper can push the recess in a direction opposite to the rocking direction of the clutch weight. Thus, the restoring force of the compressed damper is used to suppress vibration of the clutch weight about the pivot member. Here, the restoring force of the compressed damper is relatively strong. For example, the restoring force of the compressed damper is stronger than the frictional force between the damper and recess. Consequently, the damper can effectively restrain the subtle vibration of the clutch weight. This can effectively suppress the juddering of the centrifugal clutch.

As noted above, the centrifugal clutch can conveniently restrain the juddering of the centrifugal clutch.

When comparing the subject matter of the present teaching with the prior art, the possibility of further restraining the juddering of centrifugal clutches is taken into consideration.

First, it has been found that, even if the centrifugal clutch has the dampers, the juddering of the centrifugal clutch can easily occur immediately after the clutch weights contact the clutch housing. For example, the juddering of the centrifugal clutch can easily occur after the clutch weights reach the first contact position and before the frictional force between the clutch weights and clutch housing increases to the full. For example, the juddering of the centrifugal clutch can easily occur when the clutch weights move from the first contact position to the second contact position and before the frictional force between the clutch weights and clutch housing increases to the full.

Further, it has been found that, when the juddering of the centrifugal clutch occurs, rotating torque transmitted from the clutch weights to the clutch housing subtly fluctuates. The rotating torque transmitted from the clutch weights to the clutch housing will be called transmitted torque of the centrifugal clutch.

Further, it has been found that subtle fluctuations of the transmitted torque of the centrifugal clutch arise from the engine. The engine performs the combustion step (also called the explosion step) in cycles. Consequently, the rotating torque outputted from the engine fluctuates subtly. To be more specific, the rotating torque outputted from the engine fluctuates in very short cycles. Since engine's rotating torque fluctuates subtly, the rotating speed of the drive plate fluctuates subtly. Since the rotating speed of the drive plate fluctuates subtly, the centrifugal force acting on the clutch weights also fluctuates subtly. Since the centrifugal force acting on the clutch weights fluctuates subtly, the clutch weights subtly rock about the pivot members. Since the clutch weights subtly rock about the pivot members, the clutch weights vibrate subtly. Since the clutch weights vibrate subtly, the transmitted torque of the centrifugal clutch fluctuates subtly. Thus, the subtle fluctuations of the rotating torque outputted from the engine are a cause of the subtle fluctuations of the transmitted torque of the centrifugal clutch.

Incidentally, the subtle vibration of the clutch weights should be suppressed by the dampers. However, the juddering of the centrifugal clutch can occur. Accordingly, it is considered that the reason is that the dampers cannot fully restrain the subtle vibration of the clutch weights due to the engine output. Specifically, the frictional force between the dampers and clutch weights is inadequate for suppression of the subtle vibration of the clutch weights.

In the centrifugal clutch according to the present invention
the recess includes:
   a first wall capable of contacting the damper; and
   a second wall located in a position facing the first wall and spaced from the first wall to be capable of contacting the damper; and
wherein the damper is located in a space formed between the first wall and the second wall; and
as seen from the direction of the first axis, at least one of the first wall and the second wall crosses the first arc.

According to this construction, as seen from the direction of the first axis, the recess conveniently crosses the first arc. When the clutch weight rocks about the pivot member, therefore, the recess can conveniently compress the damper. As a result, the juddering of the centrifugal clutch can be suppressed conveniently.

In the above centrifugal clutch, it is preferred that:
the recess, as seen from the direction of the first axis, has a center line consisting of a continuation of halfway points between the first wall and the second wall; and
as seen from the direction of the first axis, the center line crosses the first arc.

According to this construction, as seen from the direction of the first axis, the recess conveniently crosses the first arc. Therefore, when the clutch weight rocks about the pivot member, the recess can conveniently compress the damper. As a result, the juddering of the centrifugal clutch can be suppressed conveniently.

In the above centrifugal clutch, it is preferred that:
as seen from the direction of the first axis, the recess extends linearly; and
as seen from the direction of the first axis, the recess forms an angle larger than 0 degree with a first tangent line which contacts the first arc in a position of the damper.

As seen from the direction of the first axis, the first tangent line is an imaginary line which contacts the first arc in the position of the damper. As seen from the direction of the first axis, the recess forms with the first tangent line an angle larger than 0 degree. Consequently, as seen from the direction of the first axis, the recess conveniently crosses the first arc. Therefore, when the clutch weight rocks about the pivot member, the recess can conveniently compress the damper. As a result, the juddering of the centrifugal clutch can be suppressed conveniently.

In the above centrifugal clutch, it is preferred that, as seen from the direction of the first axis, the angle formed between the recess and the first tangent line is 90 degrees or less.

According to this construction, as seen from the direction of the first axis, the recess crosses the first arc at an appropriate angle. The damper can therefore appropriately suppress the subtle vibration of the clutch weight.

In the above centrifugal clutch, it is preferred that, as seen from the direction of the first axis, the angle formed between the recess and the first tangent line is between 30 and 60 degrees inclusive.

According to this construction, as seen from the direction of the first axis, the recess crosses the first arc at a still more appropriate angle. The damper can therefore more appropriately suppress the subtle vibration of the clutch weight.

In the above centrifugal clutch, it is preferred that:
when a rotating speed of the drive plate is zero, the clutch weight is in an origin position in which the clutch weight is out of contact with the clutch housing;
the clutch weight, by rocking about the pivot member, can move from the origin position to a first contact position for contacting the clutch housing;
a direction of movement about the pivot member from the origin position to the first contact position is termed a first direction;
a direction of movement about the pivot member from the first contact position to the origin position is termed a second direction;
when the clutch weight rocks in the first direction from the first contact position, the recess compresses the damper in the first direction, and the damper pushes the recess in the second direction; and
when the clutch weight rocks in the second direction from the first contact position, the recess compresses the damper in the second direction, and the damper pushes the recess in the first direction.

According to this construction, the damper can conveniently restrain the clutch weight from rocking in the first direction from the first contact position. Further, the damper can conveniently restrain the clutch weight from rocking in the second direction from the first contact position. The damper can therefore conveniently restrain the clutch weight from subtly vibrating about the pivot member. For example, the juddering of the centrifugal clutch can be suppressed effectively also immediately after the clutch weight reaches the first contact position. The clause "immediately after the clutch weight reaches the first contact position" means, for example, after the clutch weight reaches the first contact position and before the centrifugal clutch attains the engaged state. The clause "immediately after the clutch weight reaches the first contact position" means, for example, after the clutch weight reaches the first contact position and before the frictional force between the clutch weight and clutch housing increases to the full. In other words, the juddering of the centrifugal clutch can be suppressed effectively also immediately after the clutch weight contacts the clutch housing. The clause "immediately after the clutch weight contacts the clutch housing" means, for example, after the clutch weight contacts the clutch housing and before the centrifugal clutch attains the engaged state. The clause "immediately after the clutch weight contacts the clutch housing" means, for example, after the clutch weight contacts the clutch housing and before the frictional force between the clutch weight and clutch housing increases to the full.

In the above centrifugal clutch, it is preferred that, when the clutch weight is located in the origin position, the recess compresses the damper in the second direction, and the damper pushes the recess in the first direction.

According to this construction, the clutch weight can smoothly rock in the first direction from the origin position. The clutch weight can therefore smoothly rock from the origin position to the first contact position.

In the above centrifugal clutch, it is preferred that:
the recess includes:
   a first wall capable of contacting the damper; and
   a second wall located in a position facing the first wall and spaced from the first wall to be capable of contacting the damper; and
wherein the damper is located in a space formed between the first wall and the second wall; and
when the clutch weight rocks in the first direction from the first contact position, the second wall compresses the damper in the first direction, and the damper pushes the second wall in the second direction; and
when the clutch weight rocks in the second direction from the first contact position, the first wall compresses the damper in the second direction, and the damper pushes the first wall in the first direction.

According to this construction, when the clutch weight rocks in the first direction from the first contact position, the recess can conveniently compress the damper in the first direction, and the damper can conveniently push the recess in the second direction. Further, when the clutch weight rocks in the second direction from the first contact position, the recess can conveniently compress the damper in the second direction, and the damper can conveniently push the recess in the first direction.

In the above centrifugal clutch, it is preferred that:
when the clutch weight rocks in the first direction from the first contact position, the force of the second wall increases in compressing the damper in the first direction, and the force of the damper increases in pushing the second wall in the second direction; and
when the clutch weight rocks in the second direction from the first contact position, the force of the first wall increases in compressing the damper in the second direction, and the force of the damper increases in pushing the first wall in the first direction.

According to this construction, when the clutch weight rocks in the first direction from the first contact position, the force of the damper increases in pushing the recess in the second direction. Further, when the clutch weight rocks in the second direction from the first contact position, the force of the damper increases in pushing the recess in the first direction. Therefore, the damper can restrain, with increased effect, the clutch weight in the first contact position from subtly vibrating about the pivot member.

In the above centrifugal clutch, it is preferred that:
when the clutch weight rocks in the first direction from the first contact position, the force of the first wall decreases in compressing the damper in the second direction, and the force of the damper decreases in pushing the first wall in the first direction; and
when the clutch weight rocks in the second direction from the first contact position, the force of the second wall decreases in compressing the damper in the first direction, and the force of the damper decreases in pushing the second wall in the second direction.

According to this construction, when the clutch weight rocks in the first direction from the first contact position, the force of the damper decreases in pushing the recess in the first direction. Further, when the clutch weight rocks in the second direction from the first contact position, the force of the damper decreases in pushing the recess in the second direction. Therefore, the damper can restrain, with increased effect, the clutch weight in the first contact position from subtly vibrating about the pivot member.

In the above centrifugal clutch, it is preferred that, when the clutch weight is located in the first contact position, the first wall and the second wall contact the damper, respectively.

According to this construction, when the clutch weight rocks about the pivot member from the first contact position, the damper can promptly suppress the rocking of the clutch weight. The damper can therefore restrain, with increased effect, the clutch weight from subtly vibrating in the first contact position. For example, the juddering of the centrifugal clutch can also be suppressed, with increased effect, immediately after the clutch weight reaches the first contact position.

In the above centrifugal clutch, it is preferred that, when the clutch weight is located in the first contact position, the first wall compresses the damper in the second direction, the damper pushes the first wall in the first direction, the second wall compresses the damper in the first direction, and the damper pushes the second wall in the second direction.

In other words, it is preferred that, when the clutch weight is located in the first contact position, the damper is in a state of being compressed by both the first wall and second wall.

According to this construction, when the clutch weight is located in the first contact position, the damper pushes the first wall in the first direction and the second wall in the second direction. Regardless of whether or not the clutch weight rocks in the first contact position about the pivot member, the damper pushes the first wall in the first direction and the second wall in the second direction. Consequently the damper can conveniently prevent the clutch weight from subtly vibrating in the first contact position about the pivot member. The damper can therefore conveniently prevent the juddering of the centrifugal clutch.

In the above centrifugal clutch, it is preferred that, when the clutch weight is located in the origin position, the first wall compresses the damper in the second direction, and the damper pushes the first wall in the first direction.

According to this construction, when the clutch weight is located in the origin position, the recess can conveniently compress the damper in the second direction, and the damper can conveniently push the recess in the first direction. The clutch weight can therefore smoothly rock about the pivot member from the origin position to the first contact position.

In the above centrifugal clutch, it is preferred that:
the damper has a center point as seen from the direction of the first axis;
the recess, as seen from the direction of the first axis, has a center line consisting of a continuation of halfway points between the first wall and the second wall;
when the clutch weight is located in the first contact position, as seen from the direction of the first axis, the center point of the damper is located on the center line of the recess; and
when the clutch weight is located in the origin position, as seen from the direction of the first axis, a distance between the center point of the damper and the first wall is shorter than a distance between the center point of the damper and the second wall.

When the clutch weight is located in the first contact position, as seen from the direction of the first axis, the center point of the damper is located on the center line of the recess. Consequently, even when the clutch weight vibrates in the first contact position about the pivot member, the damper can conveniently return the clutch weight to the first contact position. Even when the clutch weight vibrates in the first contact position about the pivot member, the damper can conveniently settle the clutch weight in the first contact position. Even when the clutch weight vibrates in the first contact position about the pivot member, the damper can conveniently maintain the clutch weight in the first contact position. On the other hand, when the clutch weight is located in the origin position, as seen from the direction of the first axis, the distance between the center point of the damper and the first wall is shorter than the distance between the center point of the damper and the second wall. In short, when the clutch weight is located in the origin position, the damper is close to the first wall. Consequently, when the clutch weight is located in the origin position, the first wall can conveniently compress the damper in the second direction, and the damper can conveniently push the first wall in the first direction.

In the above centrifugal clutch, it is preferred that:
when the clutch weight is located in the first contact position, the first wall compresses the damper in the second direction, the damper pushes the first wall in the first direction, the second wall compresses the damper in the first direction, and the damper pushes the second wall in the second direction; and
when the clutch weight is located in the first contact position, as seen from the direction of the first axis, the center point of the damper is located on the center line of the recess.

According to this construction, regardless of whether or not the clutch weight rocks in the first contact position about the pivot member, the damper pushes the first wall in the first direction and the second wall in the second direction. Further, when the clutch weight is located in the first contact position, the force of the damper pushing the first wall in the first direction substantially balances with the force of the damper pushing the second wall in the second direction. Consequently, the damper can, with increased effect, prevent the clutch weight from subtly vibrating in the first contact position about the pivot member. Even when the clutch weight vibrates in the first contact position, the damper can, with increased convenience, return the clutch weight to the first contact position. Even when the clutch weight vibrates in the first contact position, the damper can, with increased convenience, settle the clutch weight in the first contact position. Even when the clutch weight vibrates in the first contact position, the damper can, with increased convenience, maintain the clutch weight in the first contact position.

It is also provided a straddled vehicle comprising the centrifugal clutch as described above.

According to this straddled vehicle, the juddering of the centrifugal clutch can be restrained conveniently.

For the purpose of illustrating the present teaching, there are shown in the drawings several forms which are presently preferred.
Fig. 1 is a left side view of a straddled vehicle according to an embodiment.
Fig. 2 is a horizontal sectional view of a transmission.
Fig. 3 is a right side view of a centrifugal clutch.
Fig. 4 is a right side view of a portion of the centrifugal clutch.
Fig. 5 is a left side view of the centrifugal clutch.
Fig. 6 is a left side view of a portion of the centrifugal clutch.
Fig. 7 is a left side view of the centrifugal clutch.
Fig. 8 is a left side view of a portion of the centrifugal clutch.
Fig. 9 is a left side view of a portion of the centrifugal clutch.
Fig. 10 is a left side view of the portion of the centrifugal clutch.
Fig. 11 is a left side view of a portion of a centrifugal clutch in a modified embodiment.
Fig. 12 is a left side view of a portion of the centrifugal clutch in the modified embodiment.
Fig. 13 is a left side view of a portion of a centrifugal clutch in a modified embodiment.
Fig. 14 is a left side view of a portion of the centrifugal clutch in the modified embodiment.
Fig. 15 is a left side view of a portion of a centrifugal clutch in a modified embodiment.
Fig. 16 is a left side view of a portion of the centrifugal clutch in the modified embodiment.
Fig. 17 is a left side view of a portion of the centrifugal clutch in the modified embodiment.

A straddled vehicle 1 according to the present teaching will be described hereinafter with reference to the drawings.

### 1. Outline construction of the straddled vehicle 1

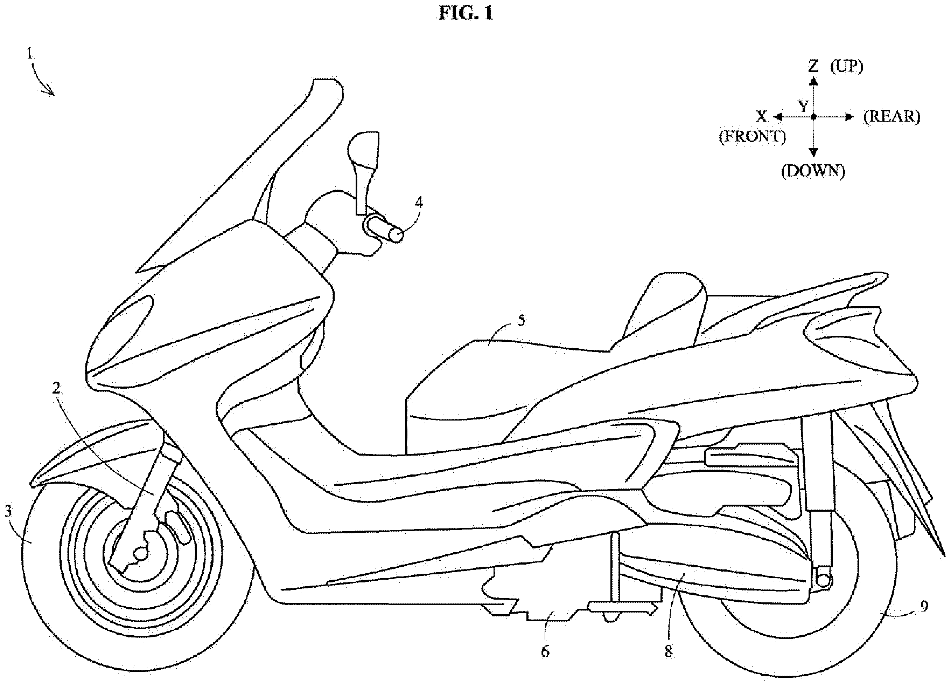

Fig. 1 is a left side view of a straddled vehicle according to an embodiment.

Fig. 1 shows a longitudinal direction X, a transverse direction Y, and an up-down direction Z of the straddled vehicle 1. The longitudinal direction X, transverse direction Y, and up-down direction Z are defined with reference to the driver (or rider) mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward" respectively mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, the "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than member Mb," defines a position in the transverse direction Y of member Ma relative to member Mb, and does not define a position in the longitudinal direction X or the up-down direction Z of member Ma relative to member Mb. In the case of this expression, member Ma may, or may not, overlap member Mb in a side view of the vehicle.

The expression "Member Ma is located rightward/leftward of member Mb," without reference to a looking direction defines a position in the transverse direction Y of member Ma relative to member Mb, a position in the longitudinal direction X of member Ma relative to member Mb, and a position in the up-down direction Z of member Ma relative to member Mb. This expression means that member Ma is located more rightward/leftward than member Mb, and that at least part of member Ma overlaps at least part of member Mb in a side view of the vehicle.

The expression "Member Ma is located rightward/leftward of member Mb in a plan view of the vehicle," defines a position in the transverse direction Y of member Ma relative to member Mb, and a position in the longitudinal direction X of member Ma relative to member Mb, and does not define a position in the up-down direction Z of member Ma relative to member Mb. This expression means that member Ma is located more rightward/leftward than member Mb, and that the front end of member Ma is located more forward than the rear end of member Mb, and that the rear end of member Ma is located more rearward than the front end of member Mb.

The expression "Member Ma is located rightward/leftward of member Mb in a front view of the vehicle," defines a position in the transverse direction Y of member Ma relative to member Mb, and a position in the up-down direction Z of member Ma relative to member Mb, and does not define a position in the longitudinal direction X of member Ma relative to member Mb. This expression means that member Ma is located more rightward/leftward than member Mb, that the upper end of member Ma is located higher than the lower end of member Mb, and that the lower end of member Ma is located lower than the upper end of member Mb.

The straddled vehicle 1 is a scooter type vehicle.

The straddled vehicle 1 includes a front fork 2, a front wheel 3, and a handlebar 4. The front fork 2 is disposed at the front of the straddled vehicle 1. The front wheel 3 is supported by the front fork 2. The handlebar 4 is supported by the front fork 2. The handlebar 4 is located higher than the front wheel 3.

The straddled vehicle 1 includes a seat 5. The seat 5 is located more rearward than the handlebar 4.

The straddled vehicle 1 includes an engine 6, a transmission 8, and a rear wheel 9. The engine 6 is located below the seat 5. The transmission 8 is located behind the engine 6. The rear wheel 9 is supported by the transmission 8. The engine 6 generates rotating power. The transmission 8 transmits the rotating power from the engine 6 to the rear wheel 9. The rear wheel 9 is rotated by the rotating power of the engine 6.

The straddled vehicle 1 includes a body frame not shown. The body frame supports the front fork 2, seat 5, engine 6, and transmission 8.

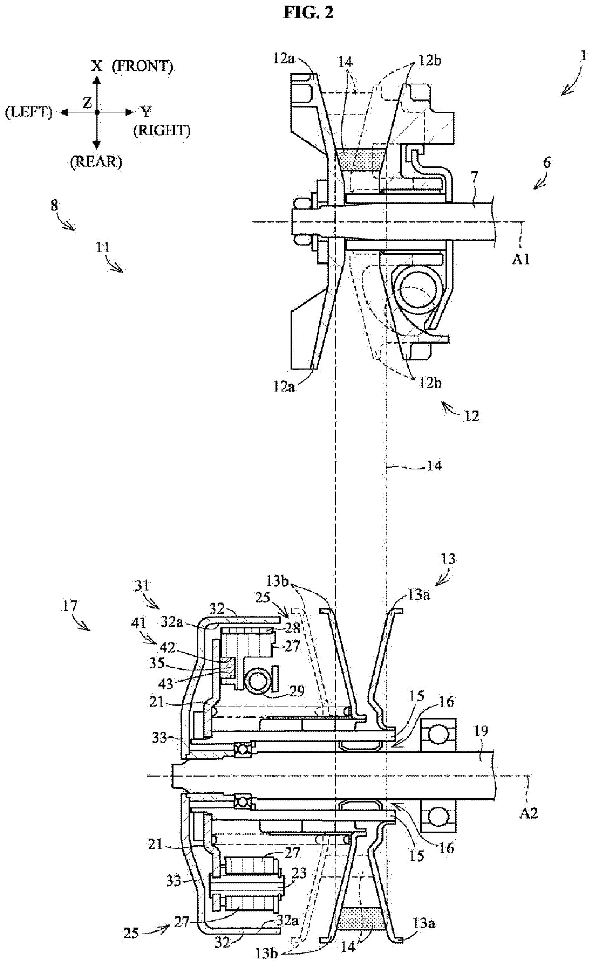

Fig. 2 is a horizontal sectional view of the transmission 8. The engine 6 has a first shaft 7. The first shaft 7 outputs the rotating power. The first shaft 7 is a crankshaft, for example.

The transmission 8 has a speed changer 11 and a second shaft 15. The speed changer 11 is connected to the first shaft 7 and second shaft 15. The speed changer 11 transmits the rotating power from the first shaft 7 to the second shaft 15. When the speed changer 11 transmits the rotating power, the speed changer 11 changes rotating speed of the rotating power. The ratio between the rotating speed of the first shaft 7 and the rotating speed of the second shaft 15 is called speed change ratio as appropriate.

The transmission 8 has a centrifugal clutch 17 and a third shaft 19. The centrifugal clutch 17 is connected to the second shaft 15 and third shaft 19. The centrifugal clutch 17 receives the rotating power of the engine 6 through the second shaft 15. The centrifugal clutch 17 connects and disconnects transmission of the rotating power from the second shaft 15 to the third shaft 19. Specifically, the centrifugal clutch 17 switches between an engaged state and a disengaged state. When the centrifugal clutch 17 is in the engaged state, the centrifugal clutch 17 transmits the rotating power from the second shaft 15 to the third shaft 19. When the centrifugal clutch 17 is in the disengaged state, the centrifugal clutch 17 does not transmit the rotating power from the second shaft 15 to the third shaft 19.

The third shaft 19 is connected to the rear wheel 9. The straddled vehicle 1 may have gears or the like, not shown, for connecting the third shaft 19 and rear wheel 9. The rotating power transmitted to the third shaft 19 drives the rear wheel 9. Thus, the centrifugal clutch 17 connects and disconnects transmission of the rotating power from the engine 6 to the rear wheel 9.

The construction of the transmission 8 will be described specifically. The first shaft 7 has an axis A1. The axis A1 is an imaginary straight line passing through the center of the first shaft 7. The axis A1 is parallel to the transverse direction Y, for example. The first shaft 7 rotates about the axis A1.

The second shaft 15 is located more rearward than the first shaft 7. The second shaft 15 has an axis A2. The axis A2 is an imaginary straight line passing through the center of the second shaft 15. The axis A2 is parallel to the axis A1, for example. The axis A2 is parallel to the transverse direction Y, for example. The second shaft 15 rotates about the axis A2.

The second shaft 15 has a tubular shape. The second shaft 15 defines a hollow portion 16. The hollow portion 16 is a void space. The hollow portion 16 is located inside the second shaft 15.

In this specification, directions perpendicular to the axis A1 are called radial directions of the axis A1. Of the radial directions of the axis A1, directions pointing away from the axis A1 are called radially outward of/from the axis A1. Of the radial directions of the axis A1, directions approaching the axis A1 are called radially inward of/toward the axis A1.

Similarly, directions perpendicular to the axis A2 are called radial directions of the axis A2. Of the radial directions of the axis A2, directions pointing away from the axis A2 are called radially outward of/from the axis A2. Of the radial directions of the axis A2, directions approaching the axis A2 are called radially inward of/toward the axis A2.

The axis A2 is an example of the first axis in according to the present teaching.

The speed changer 11 has a first pulley 12, a second pulley 13, and a belt 14. The first pulley 12 is mounted on the first shaft 7. The first pulley 12 rotates about the axis A1 integrally with the first shaft 7. The second pulley 13 is mounted on the second shaft 15. The second pulley 13 is rotates about the axis A2 integrally with the second shaft 15. The belt 14 has an endless structure. The belt 14 is wound around the first pulley 12 and second pulley 13. The belt 14 connects the first pulley 12 and second pulley 13. The belt 14 transmits the rotating power from the first shaft 7 to the second shaft 15.

The speed changer 11 is a stepless speed change device. The speed changer 11 continuously changes the speed change ratio.

Specifically, the first pulley 12 continuously changes an effective diameter of the first pulley 12. The second pulley 13 also continuously changes an effective diameter of the second pulley 13. The speed change ratio continuously changes as the effective diameter of the first pulley 12 and the effective diameter of the second pulley 13 continuously change. The effective diameter of the first pulley 12 is a diameter in a portion of the first pulley 12 that contacts the belt 14. The effective diameter of the second pulley 13 is a diameter in a portion of the second pulley 13 that contacts the belt 14.

Fig. 2 shows the first pulley 12, second pulley 13, and belt 14 in solid lines when the effective diameter of the first pulley 12 is relatively small. Fig. 2 shows the first pulley 12, second pulley 13, and belt 14 in broken lines when the effective diameter of the first pulley 12 is relatively large. The effective diameter of the second pulley 13 becomes smaller as the effective diameter of the first pulley 12 becomes larger.

Specifically, the first pulley 12 has a first fixed sheave 12a and a first movable sheave 12b. The first fixed sheave 12a and first movable sheave 12b are arranged side by side along the axis A1. The belt 14 is located between the first fixed sheave 12a and first movable sheave 12b. The spacing along the axis A1 between the first fixed sheave 12a and first movable sheave 12b enlarges radially outward from the axis A1. The first fixed sheave 12a is not movable along the axis A1 relative to the first shaft 7. The first movable sheave 12b is movable along the axis A1 relative to the first shaft 7. The effective diameter of the first pulley 12 continuously changes with movement of the first movable sheave 12b along the axis A1.

The second pulley 13 has a second fixed sheave 13a and a second movable sheave 13b. The second fixed sheave 13a and second movable sheave 13b are arranged side by side along the axis A2. The belt 14 is located between the second fixed sheave 13a and second movable sheave 13b. The spacing along the axis A2 between the second fixed sheave 13a and second movable sheave 13b enlarges radially outward from the axis A2. The second fixed sheave 13a is not movable along the axis A2 relative to the second shaft 15. The second movable sheave 13b is movable along the axis A2 relative to the second shaft 15. The effective diameter of the second pulley 13 continuously changes with movement of the second movable sheave 13b along the axis A2.

### 2. Construction of the centrifugal clutch 17

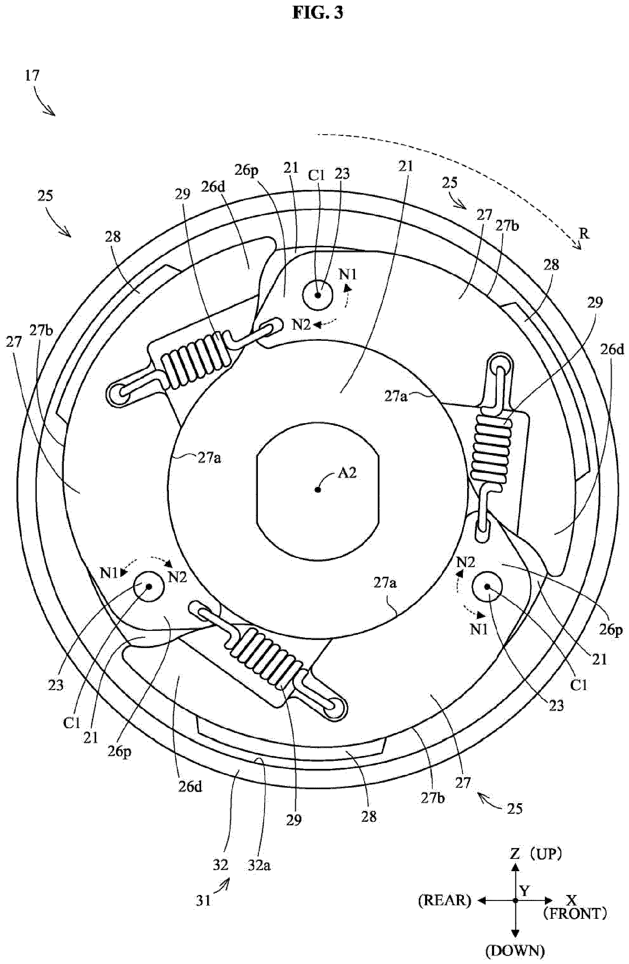

Reference is made to Figs. 2 and 3. Fig. 3 is a right side view of the centrifugal clutch 17. The centrifugal clutch 17 is located leftward of the second pulley 13.

The centrifugal clutch 17 has a drive plate 21. The drive plate 21 is mounted on the second shaft 15. The drive plate 21 is rotatable integrally with the second shaft 15. The drive plate 21 rotates about the axis A2. Fig. 3 schematically shows a direction of rotation R of the drive plate 21.

The drive plate 21 extends from the second shaft 15 radially outward of the axis A2. The drive plate 21, as seen from the direction of axis A2, has a substantially annular shape centering on the axis A2. The phrase "as seen from the direction of axis A2" is synonymous with "as seen from axis A2".

Where the axis A2 is parallel to the transverse direction Y, the phrase "as seen from the direction of axis A2" is synonymous with "in the side view of the vehicle".

The centrifugal clutch 17 has one or more (e.g. three) pivot members 23. The pivot members 26 are supported by the drive plate 21. The pivot members 23 are rotatable integrally with the drive plate 21. The pivot members 23 rotate about the axis A2.

The pivot members 23 extend parallel to the axis A2. The pivot members 23 extend rightward from the drive plate 21.

The pivot members 23 are arranged radially outward of the axis A2. The pivot members 23 are arranged more outward radially of the axis A2 than the second shaft 15. The three pivot members 23 are equidistantly arranged circumferentially of the axis A2.

Each pivot member 23 has a shape of solid or hollow cylinder. Each pivot member 23 is shaped circular as seen from the direction of axis A2.

Each pivot member 23 has center point C1 as seen from the direction of axis A2. The center point C1 is, as seen from the direction of axis A2, imaginary point located in the center of the pivot member 23.

The centrifugal clutch 17 has one or more (e.g. three) clutch weights 25. The clutch weights 25 are supported by the pivot members 23. When the drive plate 21 rotates about the axis A2, the clutch weights 25 also rotate about the axis A2.

The clutch weights 25 can further rock about the pivot members 23. When the clutch weights 25 rock about the pivot members 23, the clutch weights 25 move radially of the A2.

Specifically, the clutch weights 25 have through-holes not shown. The through-holes have a circular shape slightly larger than the pivot members 23 as seen from the direction of axis A2. The pivot members 23 are inserted in the through-holes.

The clutch weights 25 are immovable circumferentially of the axis A2 relative to the pivot members 23.

Fig. 3 shows first directions N1 and second directions N2. Each of the first directions N1 and second directions N2 is a direction around the pivot member 23. The second direction N2 is a direction opposite to the first direction N1. Each clutch weight 25 is rockable in the first direction N1 and second direction N2 relative to the pivot member 23. When the clutch weight 25 rocks in the first direction N1, the clutch weight 25 moves radially outward from the axis A2. When the clutch weight 25 rocks in the second direction N2, the clutch weight 25 moves radially inward toward the axis A2.

The clutch weights 25 are arranged rightward of the drive plate 21.

The clutch weights 25 are arranged more outward radially of the axis A2 than the second shaft 15. The three clutch weights 25 are arranged circumferentially of the axis A2.

The clutch weights 25 extend in the circumferential direction of the axis A2. The clutch weights 25 extend in the direction of rotation R from the pivot members 23. The clutch weights 25 are substantially arc-shaped as seen from the direction of axis A2.

The clutch weights 25 will be described in detail.

Reference is made to Fig. 3. Each clutch weight 25 has a proximal portion 26p and a distal portion 26d. The proximal portion 26p is a portion of the clutch weight 25 near the pivot member 23. The distal portion 26d is a portion of the clutch weight 25 far from the pivot member 23. When the centrifugal clutch 17 rocks about the pivot member 23, the distal portion 26d in particular moves radially of the axis A2.

Each clutch weight 25 has a weight body 27. The weight body 27 extends from the proximal portion 26p to the distal portion 26d. The weight body 27 is substantially arc-shaped as seen from the direction of axis A2.

The weight body 27 has an inner surface 27a and an outer surface 27b. The inner surface 27a and outer surface 27b extend circumferentially of the axis A2, respectively. The outer surface 27b is located more outward radially of the axis A2 than the inner surface 27a.

Each clutch weight 25 has a friction member 28. The friction member 28 is attached to the weight body 27. The friction member 28 is attached to the outer surface 27b. The friction member 28 extends circumferentially of the axis A2.

Reference is made to Figs. 2 and 3. The centrifugal clutch 17 has one or more (e.g. three) springs 29. The springs 29 are connected to the clutch weights 25. Each spring 29 connects two clutch weights 25 adjoining each other circumferentially of the axis A2.

The springs 29 pull the clutch weights 25 in the second direction N2. The springs 29 pull the clutch weights 25 radially inward of the axis A2. The elastic force of the springs 29 restrains the clutch weights 25 from rocking in the first direction N1. The elastic force of the springs 29 restrains the clutch weights 25 from moving radially outward of the axis A2.

The centrifugal clutch 17 includes a clutch housing 31. The clutch housing 31 is located radially outward of the axis A2 relative to the clutch weights 25. As seen from the radial directions of axis A2, the clutch housing 31 overlaps the clutch weights 25. The clutch housing 31 can contact the clutch weights 25. Specifically, the clutch housing 31 can contact the friction members 28.

The clutch housing 31 will be described in detail.

The clutch housing 31 is substantially bowl-shaped. The clutch housing 31 has a cylindrical portion 32 and a bottom portion 33. The cylindrical portion 32 extends parallel to the axis A2. The cylindrical portion 32 has a shape of substantially circular hollow cylinder centering on the axis A2. The cylindrical portion 32 is located radially outward of the axis A2 relative to the clutch weights 25. The cylindrical portion 32 can contact the clutch weights 25. The cylindrical portion 32 has an inner circumferential surface 32a. The inner circumferential surface 32a can contact the friction members 28. The bottom portion 33 is has a substantially platelike shape perpendicular to the axis A2. The bottom portion 33 closes a first end of the cylindrical portion 32 (e.g. the left end of the cylindrical portion 32). The bottom portion 33 is located leftward of the clutch weights 25. The bottom portion 33 cannot contact the clutch weights 25. The bottom portion 33 is located leftward of the drive plate 21. A second end of the cylindrical portion 32 (e.g. the right end of the cylindrical portion 32) is open.

Reference is made to Fig. 2. The third shaft 19 is connected to the clutch housing 31. The third shaft 19 is rotatable integrally with the clutch housing 31. The third shaft 19 rotates about the axis A2.

The third shaft 19 is coaxial with the second shaft 15. The axis A2 passes through the center of the third shaft 19. The third shaft 19 extends in the same direction as the axis A2.

The third shaft 19 is fixed to the bottom portion 33. The third shaft 19 extends leftward from the bottom portion 33. The third shaft 19 is located in the hollow portion 16 of the second shaft 15.

The centrifugal clutch 17 has one or more (e.g. three) dampers 29. The dampers 35 are supported by the drive plate 21. The dampers 35 are rotatable integrally with the drive plate 21. The dampers 35 rotate about the axis A2.

The dampers 35 are elastic bodies. The dampers 35 are compressively deformable. When the dampers 35 are compressed, the dampers 35 demonstrate the restoring force thereof.

The material of the dampers 35 is at least one of rubber, resin and elastomer, for example.

The dampers 35 extend parallel to the axis A2. The dampers 35 extend rightward from the drive plate 21.

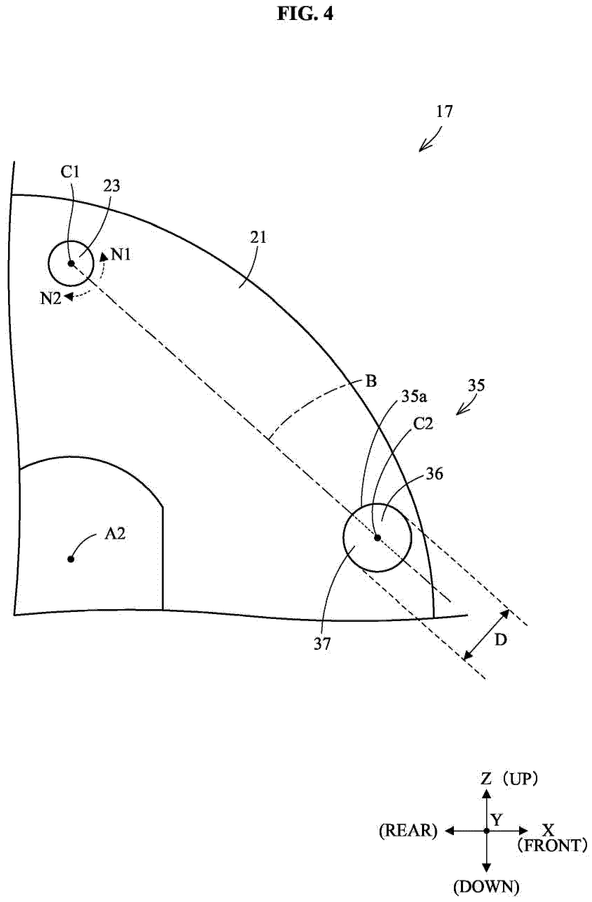

Fig. 4 is a right side view of a portion of the centrifugal clutch 17. Fig. 4 omits illustration of the clutch weights 25 and clutch housing 31. Fig. 4 shows one of the dampers 35 in natural state. When the damper 35 is in natural state, the damper 35 is free from an external force. When in natural state, the damper 35 is not deformed.

The damper 35 in natural state has a substantially solid or hollow cylindrical shape.

The damper 35 in natural state has a substantially circular shape as seen from the direction of axis A2. The damper 35 in natural state has an outside diameter D.

The damper 35 has an outer circumferential surface 35a.

The damper 35 has a center point C2 as seen from the direction of axis A2. The center point C2 is an imaginary point located at the center of the damper 35 as seen from the direction of axis A2. More particularly, the center point C2 is located at the center of the damper 35 in natural state, as seen from the direction of axis A2.

The damper 35 has a first portion 36 and a second portion 37. The first portion 36 and second portion 37 are divided by a boundary line B as seen from the direction of axis A2. The boundary line B is an imaginary straight line connecting the center point C1 and center point C2 as seen from the direction of axis A2. As seen from the direction of axis A2, the first portion 36 is located in the first direction N1 relative to the boundary line B. As seen from the direction of axis A2, the second portion 36 is located in the second direction N2 relative to the boundary line B. When the damper 35 is in natural state, the first portion 36 and second portion 37 each have a substantially semicircular shape.

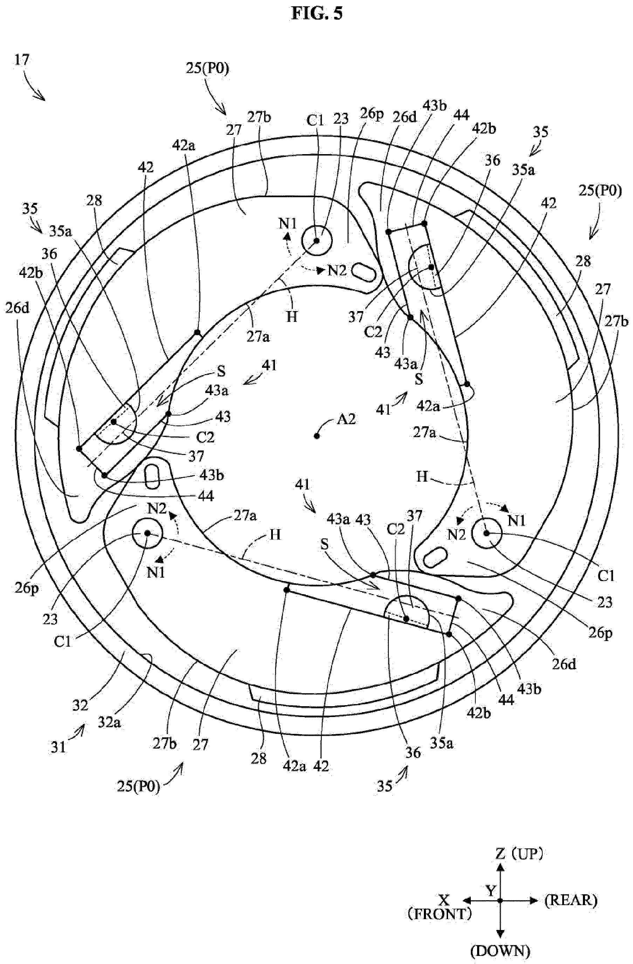

Fig. 5 is a left side view of the centrifugal clutch 17. Fig. 5 omits illustration of the drive plate 21 and springs 29. The dampers 35 are arranged more outward radially of the axis A2 than the second shaft 15. The three dampers 35 are equidistantly arranged circumferentially of the axis A2.

The dampers 35 are compressed in Fig. 5. The dampers 35 are deformed.

Reference is made to Figs. 2 and 5. Each clutch weight 25 has a recess 41. The recess 41 can contact the damper 35. The recess 41 can contact the outer circumferential surface 35a of the damper 35.

The recess 41 is located in the distal portion 26d. The recess 41 is formed in the weight body 27. The recess 41 is substantially groove-shaped dented in the same direction as the axis A2.

The recess 41 extends linearly as seen from the direction of axis A2.

The recess 41 will be described in detail.

Reference is made to Fig. 5. The recess 41 has a first wall 42 and a second wall 43. The second wall 43 is located in a position spaced from the first wall 42. The second wall 43 lies face to face with the first wall 42.

The first wall 42 and second wall 43 extend linearly, respectively.

The first wall 42 and second wall 43 are parallel to each other.

The first wall 42 and second wall 43 demarcate a space S. The space S is formed between the first wall 42 and second wall 43.

The first wall 42 has a first end 42a and a second end 42b. The first end 42a is located substantially on the inner surface 27a of the weight body 27. The second wall 43 has a first end 43a and a second end 43b. The first end 43a is located on the inner surface 27a. Therefore, the recess 41 extends to the inner surface 27a. The space S extends to the inner surface 27a. The space S opens in the inner surface 27a.

The recess 41 has a third wall 44. The third wall 44 extends from the second end 42b to the second end 43b. Therefore, the recess 41 does not extend to the outer surface 27b. The space S does not extend to the outer surface 27b. The space S does not open in the outer surface 27b.

The recess 41 has a center line H as seen from the direction of axis A2. The center line H is an imaginary line consisting of a continuation of halfway points between the first wall 42 and second wall 43. The halfway points are imaginary points equidistant from the first wall 42 and second wall 43.

The damper 35 is mounted in the space S.

The first wall 42 can contact the damper 35. The second wall 43 can also contact the damper 35.

The first wall 42 and second wall 43 can contact the outer circumferential surface 35a of the damper 35, respectively.

The first wall 42 can contact the first portion 36. The second wall 43 can contact the second portion 37.

The first wall 42 can contact the first portion 36, for example, without contacting the second portion 37. The second wall 43 can contact the second portion 37, for example, without contacting the first portion 36.

The third wall 44 does not contact the damper 35. The third wall 44 is spaced from the damper 35.

### 3. Centrifugal clutch 17 in the disengaged state

Figs. 3 and 5 illustrate the centrifugal clutch 17 in the disengaged state. The drive plate 21 does not rotate about the axis A2. The rotating speed of the drive plate 21 is zero. The pivot members 23 do not rotate about the axis A2. The clutch weights 25 do not rotate about the axis A2, either. The clutch weights 25 stay still. The clutch weights 25 are free from centrifugal force. The springs 29 pull the clutch weights 25 in the second direction N2. The springs 29 pull the clutch weights 25 radially inward of the axis A2. The clutch weights 25 do not contact the housing 31. The clutch weights 25 are spaced from the housing 31. The clutch housing 31 is separated from the drive plate 21. The centrifugal clutch 17 does not transmit the rotating power from the drive plate 21 to the clutch housing 31. The centrifugal clutch 17 does not transmit the rotating power from the second shaft 15 to the third shaft 19. The centrifugal clutch 17 does not transmit the rotating power from the engine 6 to the rear wheel 9.

Fig. 5 shows the clutch weights 25 in origin positions P0. When the rotating speed of the drive plate 21 is zero, the clutch weights 25 are in the origin positions P0. When the clutch weights 25 are in the origin positions P0, the clutch weights 25 do not contact the clutch housing 31. When the clutch weights 25 are in the origin positions P0, the clutch weights 25 are spaced from the clutch housing 31.

The origin positions P0 are position of the clutch weights 25 relative to the pivot members 23. When the rotating speed of the drive plate 21 is zero, the clutch weights 25 stay still in the origin positions P0.

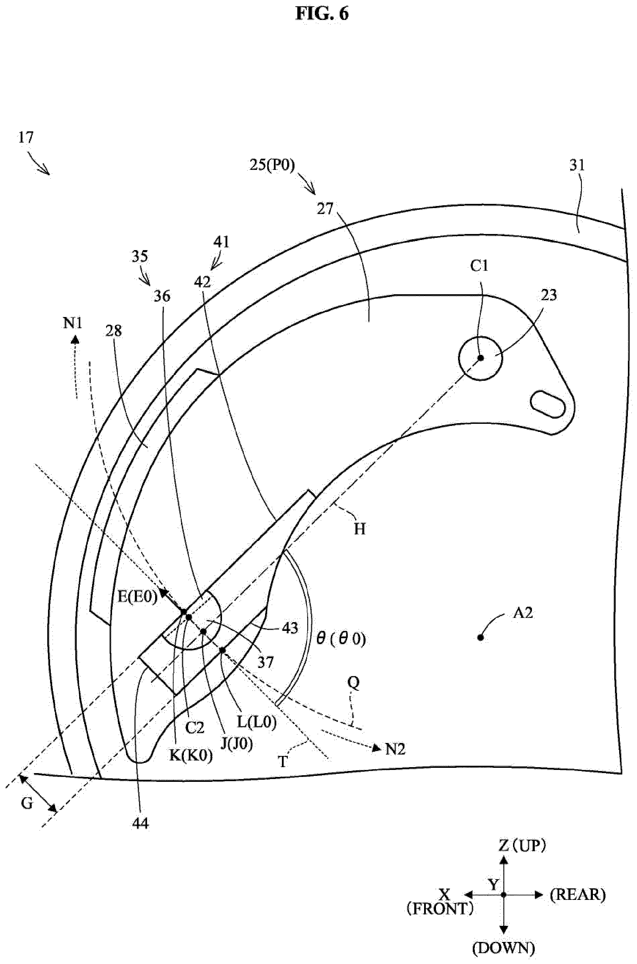

Fig. 6 is a left side view of a portion of the centrifugal clutch 17. Fig. 6 shows one clutch weight 25 in the origin position P0, and one pivot member 23 and one damper 35 relevant to the clutch weight 25. Fig. 6 omits illustration of the drive plate 21 and springs 29.

Fig. 6 shows a first arc Q. The first arc Q is an imaginary line, as seen from the direction of axis A2, which centers on the pivot member 23 and passes through the damper 35. The first arc Q, as seen from the direction of axis A2 centers on the center point C1 and passes through the center point C2. The first arc Q extends in the first direction N1 and second direction N2. The first arc Q corresponds to the direction in which the clutch weight 25 rocks about the pivot member 23.

As seen from the direction of axis A2, the recess 41 crosses the first arc Q. When the clutch weight 25 is in the origin position P0 also, as seen from the direction of axis A2, the recess 41 crosses the first arc Q.

As seen from the direction of axis A2, the center line H crosses the first arc Q. When the clutch weight 25 is in the origin position P0 also, as seen from the direction of axis A2, the center line H crosses the first arc Q.

Specifically, as seen from the direction of axis A2, the center line H crosses the first arc Q at an intersection J. The intersection J when the clutch weight 25 is in the origin position P0 will particularly be called intersection J0. When the clutch weight 25 is in the origin position P0, as seen from the direction of axis A2, the center line H crosses the first arc Q at the intersection J0.

As seen from the direction of axis A2, the first wall 42 crosses the first arc Q. When the clutch weight 25 is in the origin position P0 also, as seen from the direction of axis A2, the first wall 42 crosses the first arc Q.

Specifically, as seen from the direction of axis A2, the first wall 42 crosses the first arc Q at an intersection K. The intersection K when the clutch weight 25 is in the origin position P0 will particularly be called intersection K0. When the clutch weight 25 is in the origin position P0, as seen from the direction of axis A2, the first wall 42 crosses the first arc Q at the intersection K0.

As seen from the direction of axis A2, the second wall 43 crosses the first arc Q. When the clutch weight 25 is in the origin position P0 also, as seen from the direction of axis A2, the second wall 43 crosses the first arc Q.

Specifically, as seen from the direction of axis A2, the second wall 42 crosses the first arc Q at an intersection L. The intersection L when the clutch weight 25 is in the origin position P0 will particularly be called intersection L0. When the clutch weight 25 is in the origin position P0, as seen from the direction of axis A2, the second wall 43 crosses the first arc Q at the intersection L0.

As seen from the direction of axis A2, the third wall 44 does not cross the first arc Q. When the clutch weight 25 is in the origin position P0 also, as seen from the direction of axis A2, the third wall 44 does not cross the first arc Q.

As seen from the direction of axis A2, the third wall 44 is located outward of the first arc Q. When the clutch weight 25 is in the origin position P0 also, as seen from the direction of axis A2, the third wall 44 is located outward of the first arc Q.

Fig. 6 shows a first tangent line T. The first tangent line T is an imaginary straight line which, as sees from the direction of the axis A2, contacts the first arc Q in the position of the damper 35. As seen from the direction of axis A2, the first tangent line T contacts the first arc Q at the center point C2 of the damper 35.

As seen from the direction of axis A2, the recess 41 forms with the first tangent line T a larger angle than 0 degree. The angle formed between the recess 41 and first tangent line T as seen from the direction of axis A2 will be called angle θ. Angle θ is, for example, an angle formed between the center line H and first tangent line T as seen from the direction of axis A2. Angle θ is larger than 0 degree.

Angle θ is 90 degrees or less, for example.

Angle θ is approximately 90 degrees, for example.

When the clutch weight 25 is in the origin position P0 also, angle θ is larger than 0 degree. Angle θ when the clutch weight 25 is in the origin position P0 will particularly be called angle θ0. Angle θ0 is larger than 0 degree.

Angle θ0 is 90 degrees or less, for example.

Angle θ0 is approximately 90 degrees, for example.

As seen from the direction of axis A2, the first wall 42 forms with the first tangent line T a larger angle than 0 degree. When the clutch weight 25 is in the origin position P0 also, the angle formed between the first wall 42 and first tangent line T, as seen from the direction of axis A2, is larger than 0 degree.

As seen from the direction of axis A2, the second wall 43 forms with the first tangent line T a larger angle than 0 degree. When the clutch weight 25 is in the origin position P0 also, the angle formed between the second wall 43 and first tangent line T, as seen from the direction of axis A2, is larger than 0 degree.

Fig. 6 shows a distance G. The distance G is a distance of separation between the first wall 42 and second wall 43. The distance G is slightly smaller than the outside diameter D of the damper 35.

The distance G is substantially constant over the direction in which the center line H extends.

As seen from the direction of axis A2, the center point C1 of the pivot member 23 is located on an extension of the center line H. When the clutch weight 25 is the origin position P0 also, as seen from the direction of axis A2, the center point C1 of the pivot member 23 is located on the extension of the center line H.

When the clutch weight 25 is in the origin position P0, as seen from the direction of axis A2, the center point C2 of the damper 35 is located in a position displaced from the center line H.

When the clutch weight 25 is in the origin position P0, as seen from the direction of axis A2, the center point C2 of the damper 35 is close to the first wall 42. Specifically, when the clutch weight 25 is in the origin position P0, as seen from the direction of axis A2, the distance between the center point C2 and first wall 42 is shorter than the distance between the center point C2 and second wall 43. When the clutch weight 25 is in the origin position P0, as seen from the direction of axis A2, the center point C2 is located between the first wall 42 and center line H.

The recess 41 contacts the damper 35. When the clutch weight 25 is in the origin position P0 also, the recess 41 contacts the damper 35.

The recess 41 compresses the damper 35. When the clutch weight 25 is in the origin position P0 also, the recess 41 compresses the damper 35.

When the clutch weight 25 is in the origin position P0, the recess 41 compresses the damper 35 in the second direction N2, and the damper 35 pushes the recess 41 in the first direction N1.

When the clutch weight 25 is in the origin position P0, the recess 41 does not compress the damper 35 in the first direction N1, and the damper 35 does not push the recess 41 in the second direction N2.

When the clutch weight 25 is in the origin position P0, the force of the damper 35 pushing the recess 41 in the first direction N1 is stronger than the force of the damper 35 pushing the recess 41 in the second direction N2.

The relationship between the first wall 42 and damper 35 will be described.

When the clutch weight 25 is in the origin position P0, the first wall 42 contacts the damper 35.

More particularly, when the clutch weight 25 is in the origin position P0, the first wall 42 contacts the first portion 36. When the clutch weight 25 is in the origin position P0, the first wall 42 does not contact the second portion 37. In other words, when the clutch weight 25 is in the origin position P0, the first wall 42 is separated from the second portion 37.

When the clutch weight 25 is in the origin position P0, the first wall 42 compresses the damper 35 in the second direction N2. When the clutch weight 25 is in the origin position P0, the damper 35 pushes the first wall 42 in the first direction N1 with the restoring force of the damper 35.

More particularly, when the clutch weight 25 is in the origin position P0, the first wall 42 compresses the first portion 36 in the second direction N2. When the clutch weight 25 is in the origin position P0, the first portion 36 pushes the first wall 42 in the first direction N1. When the clutch weight 25 is in the origin position P0, the first wall 42 does not compress the second portion 37. When the clutch weight 25 is in the origin position P0, the second portion 37 does not push the first wall 42.

The relationship between the second wall 43 and damper 35 will be described.

When the clutch weight 25 is in the origin position P0, the second wall 43 does not contact the damper 35. When the clutch weight 25 is in the origin position P0, the second wall 43 is separated from the damper 35.

More particularly, when the clutch weight 25 is in the origin position P0, the second wall 43 does not contact the first portion 36 or second portion 37. When the clutch weight 25 is in the origin position P0, the second wall 43 does not contact the first portion 36, and does not contact the second portion 37. When the clutch weight 25 is in the origin position P0, the second wall 43 is separated from the first portion 36 and second portion 37.

When the clutch weight 25 is in the origin position P0, the second wall 43 does not compress the damper 35. When the clutch weight 25 is in the origin position P0, the damper 35 does not push the second wall 43.

More particularly, when the clutch weight 25 is in the origin position P0, the second wall 43 does not compress the first portion 36 or second portion 37. When the clutch weight 25 is in the origin position P0, the second wall 43 does not compress the first portion 36, and does not compress the second portion 37. When the clutch weight 25 is in the origin position P0, the first portion 36 does not push the second wall 43. When the clutch weight 25 is in the origin position P0, the second portion 37 does not push the second wall 43, either.

When the clutch weight 25 is in the origin position P0, the force of the damper 35 pushing the first wall 42 is stronger than the force of the damper 35 pushing the second wall 43.

Fig. 6 schematically shows the force E of the damper 35 pushing the first wall 42.

The force E of the damper 35 pushing the first wall 42 when the clutch weight 25 is in the origin position P0 will particularly be called force E0. When the clutch weight 25 is in the origin position P0, the damper 35 pushes the clutch weight 25 in the first direction N1 with force E0.

### 4. Centrifugal clutch 17 in the engaged state

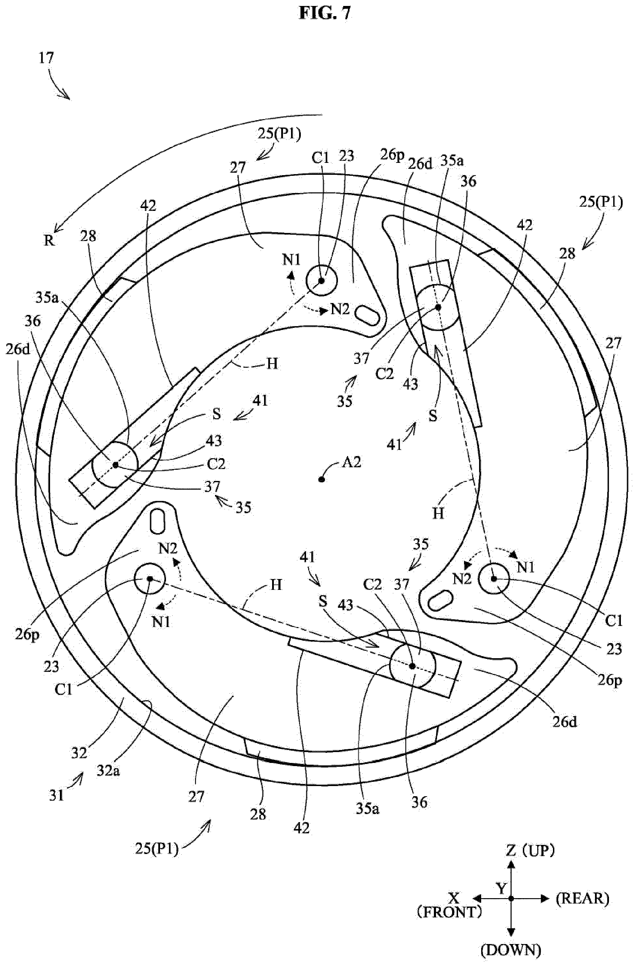

Fig. 7 is a left side view of the centrifugal clutch 17. Fig. 7 omits illustration of the drive plate 21 and springs 29. Fig. 7 illustrates the centrifugal clutch 17 in the engaged state. The drive plate 21 rotates about the axis A2. Fig. 7 schematically shows the direction of rotation R of the drive plate 21. The pivot members 23 rotate about the axis A2. The clutch weights 25 also rotate about the axis A2. When the clutch weights 25 rotate, the clutch weights 25 receive centrifugal force. The centrifugal force acting on the clutch weights 25 increases with an increase in the rotating speed of the drive plate 21.

When the centrifugal force acting on the clutch weights 25 exceeds a predetermined value, the clutch weights 25 will move against the elastic force of the springs 29. The clutch weights 25 rock about the pivot members 23, and move radially outward of the axis A2.

Fig. 7 shows each clutch weight 25 located in a first contact position P1. By rocking of the clutch weight 25 about the pivot member 23, the clutch weight 25 can move from the origin position P0 to the first contact position P1. By rocking in the first direction N1, the clutch weight 25 can move from the origin position P0 to the first contact position P1. When the clutch weight 25 is located in the first contact position P1, the clutch weight 25 contacts the clutch housing 31.

More particularly, only by rocking of the clutch weight 25 about the pivot member 23, the clutch weight 25 is can move from the origin position P0 to the first contact position P1. For example, the clutch weight 25 can move from the origin position P0 to the first contact position P1 without requiring the clutch weight 25 to move circumferentially of the axis A2 relative to the pivot member 23.

The first contact position P1 is located more outward radially of the axis A2 than the origin position P0. The distal portion 26d when the clutch weight 25 is located in the first contact position P1 is located more outward radially of the axis A2 than the distal portion 26d when the clutch weight 25 is located in the origin position P0.

The first contact position P1 is a position of the clutch weight 25 relative to the pivot member 23. The clutch weight 25 in the first contact position P1 rotates about the axis A2. When the clutch weight 25 is located in the first contact position P1, the frictional force between the clutch weight 25 and clutch housing 31 may be sufficiently strong, or may not be sufficiently strong.

When the clutch weight 25 is located in the first contact position P1 and the frictional force between the clutch weight 25 and clutch housing 31 is sufficiently strong, the centrifugal clutch 17 is in the engaged state. In the engaged state, the clutch housing 31 does not slip relative to the clutch weight 25. In the engaged state, the clutch housing 31 rotates about the axis A2 integrally with the drive plate 21. In the engaged state, the centrifugal clutch 17 transmits the rotating power from the drive plate 21 to the clutch housing 31. In the engaged state, the centrifugal clutch 17 transmits the rotating power from the second shaft 15 to the third shaft 19. In the engaged state, the centrifugal clutch 17 transmits the rotating power from the engine 6 to the rear wheel 9.

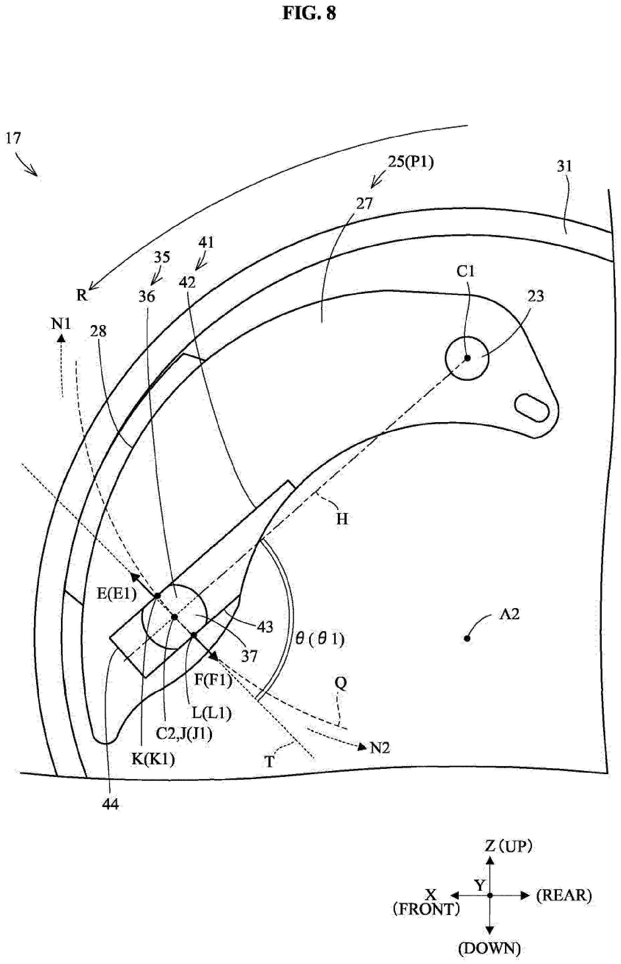

Fig. 8 is a left side view of a portion of the centrifugal clutch 17. Fig. 8 shows one clutch weight 25 located in the first contact position P1, and one pivot member 23 and one damper 35 relevant to the clutch weight 25.

As seen from the direction of axis A2, the recess 41 crosses the first arc Q. When the clutch weight 25 is located in the first contact position P1 also, as seen from the direction of axis A2, the recess 41 crosses the first arc Q.

When the clutch weight 25 moves from the origin position P0 to the first contact position P1, as seen from the direction of axis A2, the recess 41 constantly crosses the first arc Q.

As seen from the direction of axis A2, the center line H crosses the first arc Q. When the clutch weight 25 is located in the first contact position P1 also, as seen from the direction of axis A2, the center line H crosses the first arc Q.

The intersection J when the clutch weight 25 is in the first contact position P1 will particularly be called intersection J1. When the clutch weight 25 is located in the first contact position P1, as seen from the direction of axis A2, the center line H crosses the first arc Q at the intersection J1.

When the clutch weight 25 moves from the origin position P0 to the first contact position P1, as seen from the direction of axis A2, the center line H constantly crosses the first arc Q.

As seen from the direction of axis A2, the first wall 42 crosses the first arc Q. When the clutch weight 25 is located in the first contact position P1 also, as seen from the direction of axis A2, the first wall 42 crosses the first arc Q.

The intersection K when the clutch weight 25 is located in the first contact position P1 will particularly be called intersection K1. When the clutch weight 25 is located in the first contact position P1, as seen from the direction of axis A2, the first wall 42 crosses the first arc Q at the intersection K1.

When the clutch weight 25 moves from the origin position P0 to the first contact position P1, as seen from the direction of axis A2, the first wall 42 constantly crosses the first arc Q.

As seen from the direction of axis A2, the second wall 43 crosses the first arc Q. When the clutch weight 25 is located in the first contact position P1 also, as seen from the direction of axis A2, the second wall 43 crosses the first arc Q.

The intersection L when the clutch weight 25 is located in the first contact position P1 will particularly be called intersection L1. When the clutch weight 25 is located in the first contact position P1, as seen from the direction of axis A2, the second wall 43 crosses the first arc Q at the intersection L1.

When the clutch weight 25 moves from the origin position P0 to the first contact position P1, as seen from the direction of axis A2, the second wall 43 constantly crosses the first arc Q.

As seen from the direction of axis A2, the third wall 44 does not cross the first arc Q. When the clutch weight 25 is located in the first contact position P1 also, as seen from the direction of axis A2, the third wall 44 does not cross the first arc Q.

As seen from the direction of axis A2, the third wall 44 is located outward of the first arc Q. When the clutch weight 25 is located in the first contact position P1 also, as seen from the direction of axis A2, the third wall 44 is located outward of the first arc Q.

When the clutch weight 25 moves from the origin position P0 to the first contact position P1, as seen from the direction of axis A2, the third wall 44 does not cross the first arc Q. When the clutch weight 25 moves from the origin position P0 to the first contact position P1, as seen from the direction of axis A2, the third wall 44 is constantly located outward of the first arc Q.

As seen from the direction of axis A2, angle θ formed between the recess 41 and first tangent line T is larger than 0 degree. When the clutch weight 25 is located in the first contact position P1 also, as seen from the direction of axis A2, angle θ is larger than 0 degree. Angle θ when the clutch weight 25 is in the first contact position P1 will particularly be called angle θ1. Angle θ1 is larger than 0 degree. Angle θ1 is slightly smaller than angle θ0.

Angle θ is 90 degrees or less, for example. Angle θ1 is 90 degrees or less, for example.

Angle θ is approximately 90 degrees, for example. Angle θ1 is approximately 90 degrees, for example.

When the clutch weight 25 moves from the origin position P0 to the first contact position P1, angle θ is maintained larger than 0 degree.

When the clutch weight 25 moves from the origin position P0 to the first contact position P1, angle θ is maintained 90 degrees or less, for example.

When the clutch weight 25 moves from the origin position P0 to the first contact position P1, angle θ is maintained approximately 90 degrees, for example.

As seen from the direction of axis A2, the angle formed between the first wall 42 and first tangent line T is larger than 0 degree. When the clutch weight 25 is located in the first contact position P1 also, as seen from the direction of axis A2, the angle formed between the first wall 42 and first tangent line T is larger than 0 degree.

When the clutch weight 25 moves from the origin position P0 to the first contact position P1, as seen from the direction of axis A2, the angle formed between the first wall 42 and first tangent line T is maintained larger than 0 degree.

As seen from the direction of axis A2, the angle formed between the second wall 43 and first tangent line T is larger than 0 degree. When the clutch weight 25 is located in the first contact position P1 also, as seen from the direction of axis A2, the angle formed between the second wall 43 and first tangent line T is larger than 0 degree.

When the clutch weight 25 moves from the origin position P0 to the first contact position P1, as seen from the direction of axis A2, the angle formed between the second wall 43 and first tangent line T is maintained larger than 0 degree.

As seen from the direction of axis A2, the center point C1 of the pivot member 23 is located on the extension of the center line H. When the clutch weight 25 is located in the first contact position P1 also, as seen from the direction of axis A2, the center point C1 of the pivot member 23 is located on the extension of the center line H.

When the clutch weight 25 moves from the origin position P0 to the first contact position P1, as seen from the direction of axis A2, the center point C1 of the pivot member 23 is constantly located on the extension of the center line H.

When the clutch weight 25 is located in the first contact position P1, as seen from the direction of axis A2, the center point C2 of the damper 35 is located on the center line H.

When the clutch weight 25 is located in the first contact position P1, as seen from the direction of axis A2, the center point C2 of the damper 35 coincides with the intersection J1.

When the clutch weight 25 is located in the first contact position P1, as seen from the direction of axis A2, the center point C2 of the damper 35 is located in a position equidistant from the first wall 42 and second wall 43. Specifically, when the clutch weight 25 is located in the first contact position P1, as seen from the direction of axis A2, the distance between the center point C2 and first wall 42 is equal to the distance between the center point C2 and second wall 43.

The recess 41 contacts the damper 35. When the clutch weight 25 is located in the first contact position P1 also, the recess 41 contacts the damper 35.

The recess 41 compresses the damper 35. When the clutch weight 25 is located in the first contact position P1 also, the recess 41 compresses the damper 35.

When the clutch weight 25 is located in the first contact position P1, the recess 41 compresses the damper 35 in the first direction N1, and the damper 35 pushes the recess 41 in the second direction N2. Further, when the clutch weight 25 is located in the first contact position P1, the recess 41 compresses the damper 35 in the second direction N2, and the damper 35 pushes the recess 41 in the first direction N1.

When the clutch weight 25 is located in the first contact position P1, the force of the damper 35 pushing the recess 41 in the first direction N1 is substantially equal to the force of the damper 35 pushing the recess 41 in the second direction N2.

The relationship between the first wall 42 and damper 35 will be described.

When the clutch weight 25 is located in the first contact position P1, the first wall 42 contacts the damper 35.

More particularly, when the clutch weight 25 is located in the first contact position P1, the first wall 42 contacts the first portion 36. When the clutch weight 25 is located in the first contact position P1, the first wall 42 does not contact the second portion 37. In other words, when the clutch weight 25 is located in the first contact position P1, the first wall 42 is separated from the second portion 37.

When the clutch weight 25 is located in the first contact position P1, the first wall 42 compresses the damper 35 in the second direction N2. When the clutch weight 25 is located in the first contact position P1, the damper 35 pushes the first wall 42 in the first direction N1 with the restoring force of the damper 35.

More particularly, when the clutch weight 25 is located in the first contact position P1, the first wall 42 compresses the first portion 36 in the second direction N2. When the clutch weight 25 is located in the first contact position P1, the first portion 36 pushes the first wall 42 in the first direction N1. When the clutch weight 25 is located in the first contact position P1, the first wall 42 does not compress the second portion 37. When the clutch weight 25 is located in the first contact position P1, the second portion 37 does not push the first wall 42.

The relationship between the second wall 43 and damper 35 will be described.

When the clutch weight 25 is located in the first contact position P1, the second wall 43 contacts the damper 35.

More particularly, when the clutch weight 25 is located in the first contact position P1, the second wall 43 contacts the second portion 37. When the clutch weight 25 is located in the first contact position P1, the second wall 43 does not contact the first portion 36. In other words, when the clutch weight 25 is located in the first contact position P1, the second wall 43 is separated from the first portion 36.

When the clutch weight 25 is located in the first contact position P1, the second wall 43 compresses the damper 35 in the first direction N1. When the clutch weight 25 is located in the first contact position P1, the damper 35 pushes the second wall 43 in the second direction N2.

More particularly, when the clutch weight 25 is located in the first contact position P1, the second wall 43 compresses the second portion 37 in the first direction N1. When the clutch weight 25 is located in the first contact position P1, the second portion 43 pushes the second wall 43 in the second direction N2. When the clutch weight 25 is located in the first contact position P1, the second wall 43 does not compress the first portion 36. When the clutch weight 25 is located in the first contact position P1, the first portion 36 does not push the second wall 43.

Fig. 8 schematically shows, in addition to force E, force F of the damper 35 pushing the second wall 43.

The direction of force F is opposite to the direction of force E.

Force E of the damper 35 pushing the first wall 42 when the clutch weight 25 is located in the first contact position P1 will particularly be called force E1. Force F of the damper 35 pushing the second wall 43 when the clutch weight 25 is located in the first contact position P1 will particularly be called force F1. The direction of force F1 is opposite to the direction of force E1. The magnitude of force F1 is approximately equal to the magnitude of force E1. Force E1 and force F1 are substantially balanced.

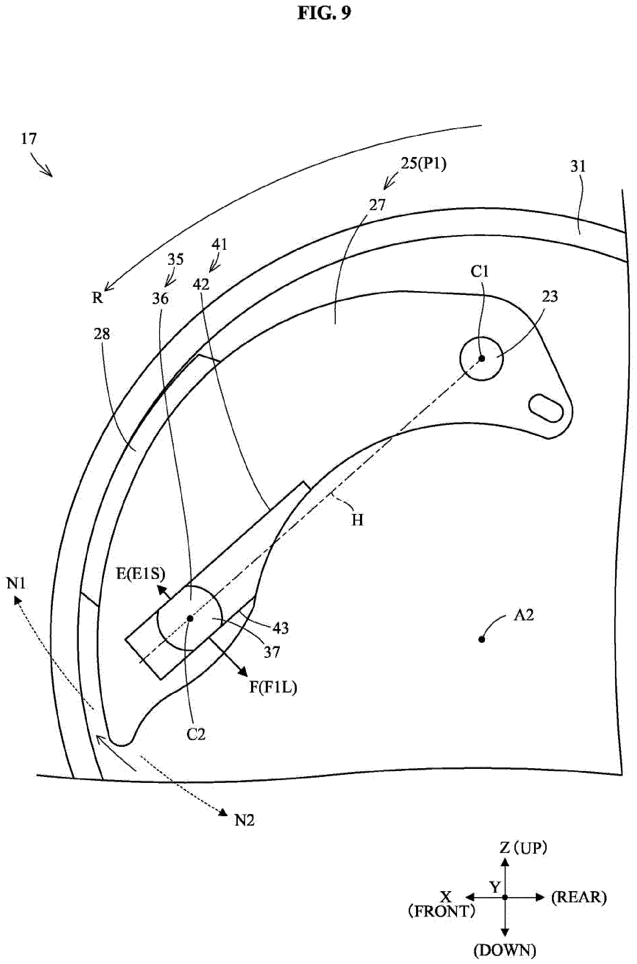

Fig. 9 is a left side view of a portion of the centrifugal clutch 17. Fig. 9 schematically shows the damper 35 when the clutch weight 25 subtly rocks in the first direction N1 from the first contact position P1.

When the clutch weight 25 rocks in the first direction N1 from the first contact position P1, the recess 41 further compresses the damper 35 in the first direction N1, and the damper 35 further pushes the recess 41 in the second direction N2.

Specifically, when the clutch weight 25 rocks in the first direction N1 from the first contact position P1, the second wall 43 further compresses the damper 35 in the first direction N1, and the damper 35 further pushes the second wall 43 in the second direction N2.

More particularly, when the clutch weight 25 rocks in the first direction N1 from the first contact position P1, the force of the second wall 43 increases in compressing the damper 35 in the first direction N1, and the force F of the damper 35 increases in pushing the second wall 43 in the second direction N2.

The force F of the damper 35 pushing the second wall 43 when the clutch weight 25 rocks in the first direction N1 from the first contact position P1 will be called force F1L. Force F1L is stronger than force F1. When the clutch weight 25 rocks in the first direction N1 from the first contact position P1, force F increases from force F1 to force F1L.

Further, when the clutch weight 25 rocks in the first direction N1 from the first contact position P1, the force of the recess 41 decreases in compressing the damper 35 in the second direction N2, and the force of the damper 35 decreases in pushing the recess 41 in the first direction N1.

Specifically, when the clutch weight 25 rocks in the first direction N1 from the first contact position P1, the force of the first wall 42 compressing the damper 35 in the second direction N2 decreases, and the force E of the damper 35 pushing the first wall 42 in the first direction N1 decreases.

The force E of the damper 35 pushing the first wall 42 when the clutch weight 25 rocks in the first direction N1 from the first contact position P1 will be called force E1S. Force E1S is weaker than force E1. When the clutch weight 25 rocks in the first direction N1 from the first contact position P1, force E decreases from force E1 to force E1S.

Force E1S is weaker than force F1L. When the clutch weight 25 rocks in the first direction N1 from the first contact position P1, force E becomes weaker than force F.

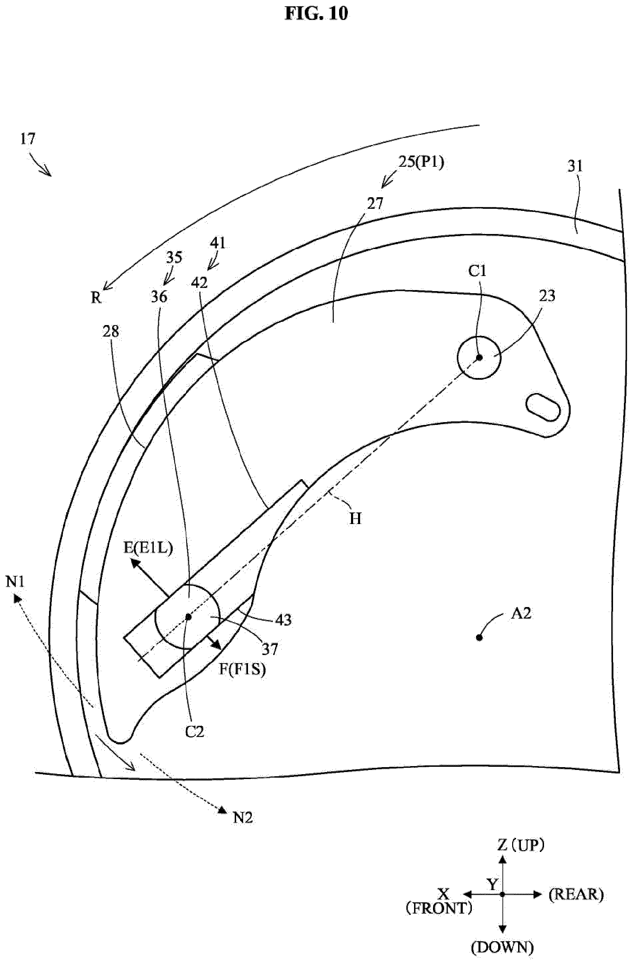

Fig. 10 is a left side view of a portion of the centrifugal clutch 17. Fig. 10 schematically shows the damper 35 when the clutch weight 25 subtly rocks in the second direction N2 from the first contact position P1.

When the clutch weight 25 rocks in the second direction N2 from the first contact position P1, the recess 41 further compresses the damper 35 in the second direction N2, and the damper 35 further pushes the recess 41 in the first direction N1.

Specifically, when the clutch weight 25 rocks in the second direction N2 from the first contact position P1, the first wall 42 further compresses the damper 35 in the second direction N2, and the damper 35 further pushes the first wall 42 in the first direction N1.

More particularly, when the clutch weight 25 rocks in the second direction N2 from the first contact position P1, the force of the first wall 43 increases in compressing the damper 35 in the second direction N2, and the force E of the damper 35 increases in pushing the first wall 42 in the first direction N1.

The force E of the damper 35 when the clutch weight 25 rocks in the second direction N2 from the first contact position P1 will particularly be called force E1L. Force E1L is stronger than force E1. When the clutch weight 25 rocks in the second direction N2 from the first contact position P1, force E increases from force E1 to force E1L.

Further, when the clutch weight 25 rocks in the second direction N2 from the first contact position P1, the force of the recess 41 decreases in compressing the damper 35 in the first direction N1, and the force of the damper 35 decreases in pushing the recess 41 in the second direction N2.

Specifically, when the clutch weight 25 rocks in the second direction N2 from the first contact position P1, the force of the second wall 43 decreases in compressing the damper 35 in the first direction N1, and the force F of the damper 35 decreases in pushing the second wall 43 in the second direction N2.

The force F of the damper 35 when the clutch weight 25 rocks in the second direction N2 from the first contact position P1 will particularly be called force F1S. Force F1S is weaker than force F1. When the clutch weight 25 rocks in the second direction N2 from the first contact position P1, force F decreases from force F1 to force F1S.

Force F1S is weaker than force E1L. When the clutch weight 25 rocks in the second direction N2 from the first contact position P1, force F becomes weaker than force E.

### 5. Advantageous Effects

The centrifugal clutch 21 includes the drive plate 21, the pivot member 23, and the clutch weight 25. The drive plate 21 is rotatable about an axis A2. The pivot member 23 is supported by the drive plate 21. The clutch weight 25 is supported by the pivot member 23. The clutch weight 25 can rock about the pivot member 23. Consequently, when the drive plate 21 rotates about the axis A2, the pivot member 23 and clutch weight 25 also rotate about the axis A2, and the clutch weight 25 receives the centrifugal force. The centrifugal force acting on the clutch weight 25 causes the clutch weight 25 to further rock about the pivot member 23, and move radially outward of the axis A2. Specifically, when the clutch weight 25 rocks about the pivot member 23, the clutch weight 25 can move from the origin position P0 to the first contact position P1.

The centrifugal clutch 17 includes the clutch housing 31. The clutch housing 31 is located radially outward of the axis A2 relative to the clutch weight 25. The clutch housing 31 can contact the clutch weight 25. Consequently, when the clutch weight 25 does not move radially outward of the axis A2, the clutch weight 25 does not contact the clutch housing 31. For example, when the clutch weight 25 is located in the origin position P0, the clutch weight 25 does not contact the clutch housing 31. When the clutch weight 25 is in the origin position P0, the clutch weight 25 is separated from the clutch housing 31. When the clutch weight 25 does not contact the clutch housing 31, the centrifugal clutch 17 does not transmit rotating power from the drive plate 21 to the clutch housing 31. On the other hand, when the clutch weight 25 moves radially outward of the axis A2, the clutch weight 25 contacts the clutch housing 31. For example, when the clutch weight 25 is located in the first contact position P1, the clutch weight 25 contacts the clutch housing 31. When the clutch weight 25 contacts the clutch housing 31 with a sufficient frictional force, the centrifugal clutch 17 transmits the rotating power from the drive plate 21 to the clutch housing 31.

The centrifugal clutch 17 includes the damper 35. The damper 35 is supported by the drive plate 21. The clutch weight 25 has the recess 41. The recess 41 can contact the damper 35. The first arc Q is an imaginary line which, as seen from the direction of axis A2, passes through the damper 35, centering on the pivot member 23. The first arc Q corresponds to the direction in which the clutch weight 25 rocks about the pivot member 23. The direction in which the clutch weight 25 rocks about the pivot member 23 will be called rocking direction of the clutch weight 25. As seen from the direction of axis A2, the recess 41 crosses the first arc Q. Therefore, when the clutch weight 25 rocks about the pivot member 23, the recess 41 can compress at least part of the damper 35. When the clutch weight 25 rocks about the pivot member 23, the damper 35 can push the recess 41 in a direction opposite to the moving direction of the clutch weight 25. For example, when the clutch weight 25 rocks in a first direction N1, the damper 35 pushes the recess 41 in the second direction N2. For example, when the clutch weight 25 rocks in the second direction N2, the damper 35 pushes the recess 41 in the first direction N1. Thus, the restoring force of the compressed damper 35 is used to suppress vibration of the clutch weight 25 about the pivot member 23. Here, the restoring force of the compressed damper 35 is relatively strong. For example, the restoring force of the compressed damper 35 is stronger than the frictional force between the damper 35 and recess 41. The frictional force between the damper 35 and recess 41 is generated, for example, when the recess 41 slides relative to the damper 35. Consequently, the damper 35 can effectively restrain the clutch weight 25 from subtly vibrating about the pivot member 23. This can effectively suppress the juddering of the centrifugal clutch 17.

As noted above, the centrifugal clutch 17 can conveniently restrain the juddering of the centrifugal clutch 17.

As noted above, the subtle vibration of the centrifugal clutch 17 can be suppressed effectively. It is therefore possible to effectively suppress the subtle fluctuations of rotating torque transmitted from the clutch weights 25 to the clutch housing 31. That is, it is possible to effectively suppress the subtle fluctuations of transmitted torque of the centrifugal clutch 17. The transmitted torque of the centrifugal clutch 17 is the rotating torque transmitted from the clutch weights 25 to the clutch housing 31.

The recess 41 has the first wall 42 and the second wall 43. The first wall 42 can contact the damper 35. The second wall 43 can also contact the damper 35. The second wall 43 is located in a position spaced from the first wall 42 and facing the first wall 42. The damper 35 is located in the space S formed between the first wall 42 and second wall 43. As seen from the direction of axis A2, the first wall 42 and second wall 43 cross the first arc Q, respectively. Therefore, as seen from the direction of axis A2, the recess 41 conveniently crosses the first arc Q. When the clutch weight 25 rocks about the pivot member 23, therefore, the recess 41 can conveniently compress the damper 35. As a result, the juddering of the centrifugal clutch 17 can be suppressed conveniently.

The recess 41 has the center line H. The center line H is an imaginary line which, as seen from the direction of axis A2, consists of a continuation of halfway points between the first wall 42 and second wall 43. As seen from the direction of axis A2, the center line H crosses the first arc Q. Thus, as seen from the direction of axis A2, the recess 41 conveniently crosses the first arc Q. Therefore, when the clutch weight 25 rocks about the pivot member 23, the recess 41 can conveniently compress the damper 35. As a result, the juddering of the centrifugal clutch 17 can be suppressed conveniently.

As seen from the direction of axis A2, the recess 41 extends linearly. As seen from the direction of axis A2, the first tangent line T contacts the first arc Q in the position of the damper 35. As seen from the direction of axis A2, the recess 41 forms with the first tangent line T an angle θ larger than 0 degree. Consequently, as seen from the direction of axis A2, the recess 41 conveniently crosses the first arc Q. Therefore, when the clutch weight 25 rocks about the pivot member 23, the recess 41 can conveniently compress the damper 35. As a result, the juddering of the centrifugal clutch 17 can be suppressed conveniently.

Angle θ1 is larger than 0 degree. Specifically, when the clutch weight 25 is located in the first contact position P1, as seen from the direction of axis A2, the angle θ formed between the recess 41 and first tangent line T is larger than 0 degree. Therefore, when the clutch weight 25 is located in the first contact position P1, the recess 41 can conveniently compress the damper 35.

Angle θ0 is larger than 0 degree. Specifically, when the clutch weight 25 is in the origin position P0, as seen from the direction of axis A2, the angle θ formed between the recess 41 and first tangent line T is larger than 0 degree. Therefore, when the clutch weight 25 is in the origin position P0, the recess 41 can conveniently compress the damper 35.

When the clutch weight 25 rocks from the origin position P0 to the first contact position P1, angle θ is maintained larger than 0 degree. Therefore, when the clutch weight 25 rocks from the origin position P0 to the first contact position P1, the recess 41 can conveniently compress the clutch weight 25.

As seen from the direction of axis A2, angle θ formed between the recess 41 and first tangent line T is 90 degrees or less. Consequently, as seen from the direction of axis A2, the recess 41 crosses the first arc Q at an appropriate angle. The damper 35 can therefore appropriately suppress the subtle vibration of the clutch weight 25.

Angle θ1 is 90 degrees or less, for example. Specifically, when the clutch weight 25 is located in first contact position P1, as seen from the direction of axis A2, angle θ formed between the recess 41 and first tangent line T is 90 degrees or less. Therefore, when the clutch weight 25 is located in the first contact position P1, the damper 35 can appropriately suppress the subtle vibration of the clutch weight 25.

Angle θ0 is 90 degrees or less, for example. Specifically, when the clutch weight 25 is located in the origin position P0, as seen from the direction of axis A2, angle θ formed between the recess 41 and first tangent line T is 90 degrees or less. Therefore, when the clutch weight 25 is in the origin position P0, the damper 35 can appropriately suppress the subtle vibration of the clutch weight 25.

When the clutch weight 25 rocks from the origin position P0 to the first contact position P1, angle θ is maintained at 90 degrees or less, for example. Therefore, when the clutch weight 25 rocks from the origin position P0 to the first contact position P1, the damper 35 can appropriately suppress the subtle vibration of the clutch weight 25.

Angle θ is approximately 90 degrees, for example. Therefore, the recess 41 can effectively compress the damper 35.

Angle θ1 is approximately 90 degrees, for example. Specifically, when the clutch weight 25 is located in the first contact position P1, as seen from the direction of axis A2, angle θ formed between the recess 41 and first tangent line T is approximately 90 degrees. Therefore, when the clutch weight 25 is located in the first contact position P1, the recess 41 can effectively compress the damper 35.

Angle θ0 is approximately 90 degrees, for example. Specifically, when the clutch weight 25 is in the origin position P0, as seen from the direction of axis A2, angle θ formed between the recess 41 and first tangent line T is approximately 90 degrees. Therefore, when the clutch weight 25 is located in the origin position P0, the recess 41 can effectively compress the damper 35.

When the clutch weight 25 rocks from the origin position P0 to the first contact position P1, angle θ is maintained at approximately 90 degrees, for example. Therefore, when the clutch weight 25 rocks from the origin position P0 to the first contact position P1, the recess 41 can effectively suppress the damper 35.

As seen from the direction of axis A2, the first wall 42 forms with the first tangent line T an angle larger than 0 degree. As seen from the direction of axis A2, the second wall 43 forms with the first tangent line T an angle larger than 0 degree. Consequently, as seen from the direction of axis A2, the recess 41 conveniently crosses the first arc Q. Therefore, when the clutch weight 25 rocks about the pivot member 23, the recess 41 can conveniently compress the damper 35. As a result, the juddering of the centrifugal clutch 17 can be suppressed conveniently.

When the rotating speed of the drive plate 21 is zero, the clutch weight 25 is in the origin position P0. When the clutch weight 25 is in the origin position P0, the clutch weight 25 does not contact the clutch housing 31. By rocking about the pivot member 23, the clutch weight 25 can move from the origin position P0 to the first contact position P1. When the clutch weight 25 is located in the first contact position P1, the clutch weight 25 contacts the clutch housing 31. When the clutch weight 25 rocks in the first direction N1 from the first contact position P1, the recess 41 compresses the damper 35 in the first direction N1, and the damper 35 pushes the recess 41 in the second direction N2. When the clutch weight 25 rocks in the second direction N2 from the first contact position P1, the recess 41 compresses the damper 35 in the second direction N2, and the damper 35 pushes the recess 41 in the first direction N1. Here, the first direction N1 is a direction of movement about the pivot member 23 from the origin position P0 to the first contact position P1. In other words, the first direction N1 is a direction pointing from the origin position P0 toward the first contact position P1 around the pivot member 23. The second direction N2 is a direction of movement about the pivot member 23 from the first contact position P1 to the origin position P0. In other words, the second direction N2 is a direction pointing from the first contact position P1 toward the origin position P0 around the pivot member 23. The damper 35 can therefore conveniently restrain the clutch weight 25 from rocking in the first direction N1 from the first contact position P1. Further, the damper 35 can conveniently restrain the clutch weight 25 from rocking in the second direction N2 from the first contact position P1. The damper 35 can therefore conveniently restrain the clutch weight 25 in the first contact position P1 from subtly vibrating about the pivot member 23. For example, the juddering of the centrifugal clutch 17 can be suppressed effectively also immediately after the clutch weight 25 reaches the first contact position P1. In other words, the juddering of the centrifugal clutch 17 can be suppressed effectively also immediately after the clutch weight 25 contacts the clutch housing 31. The clause "immediately after the clutch weight 25 contacts the clutch housing 31" means, for example, after the clutch weight 25 reaches the first contact position P1 and before the centrifugal clutch 17 attains the engaged state. For example, the juddering of the centrifugal clutch 17 can be suppressed effectively also after the clutch weight 25 reaches the first contact position P1 and before the centrifugal clutch 17 becomes the engaged state. The clause "immediately after the clutch weight 25 contacts the clutch housing 31" means, for example, after the clutch weight 25 reaches the first contact position P1 and before the frictional force between the clutch weight 25 and clutch housing 31 increases to the full. For example, the juddering of the centrifugal clutch 17 can be suppressed effectively also after the clutch weight 25 reaches the first contact position P1 and before the frictional force between the clutch weight 25 and clutch housing 31 increases to the full.

When the clutch weight 25 rocks in the first direction N1 from the first contact position P1, the second wall 43 compresses the damper 35 in the first direction N1, and the damper 35 pushes the second wall 43 in the second direction N2. When the clutch weight 25 rocks in the second direction N2 from the first contact position P1, the first wall 42 compresses the damper 35 in the second direction N2, and the damper 35 pushes the first wall 42 in the first direction N1. Consequently, when the clutch weight 25 rocks in the first direction N1 from the first contact position P1, the recess 41 can conveniently compress the damper 35 in the first direction N1, and the damper 35 can conveniently push the recess 41 in the second direction N2. Further, when the clutch weight 25 rocks in the second direction N2 from the first contact position P1, the recess 41 can conveniently compress the damper 35 in the second direction N2, and the damper 35 can conveniently push the recess 41 in the first direction N1.

When the clutch weight 25 rocks in the first direction N1 from the first contact position P1, the force of the recess 41 increases in compressing the damper 35 in the first direction N1, and the force of the damper 35 increases in pushing the recess 41 in the second direction N2. When the clutch weight 25 rocks in the second direction N2 from the first contact position P1, the force of the recess 41 increases in compressing the damper 35 in the second direction N2, and the force of the damper 35 increases in pushing the recess 41 in the first direction N1. Consequently, the damper 35 can effectively restrain the clutch weight 25 from rocking in the first direction N1 from the first contact position P1. Further, the damper 35 can effectively restrain the clutch weight 25 from rocking in the second direction N2 from the first contact position P1. Therefore, the damper 35 can effectively restrain the clutch weight 25 in the first contact position P1 from subtly vibrating about the pivot member 23.

When the clutch weight 25 rocks in the first direction N1 from the first contact position P1, the force of the second wall 43 increases in compressing the damper 35 in the first direction N1, and the force F of the damper 35 increases in pushing the second wall 43 in the second direction N2. When the clutch weight 25 rocks in the second direction N2 from the first contact position P1, the force of the first wall 42 increases in compressing the damper 35 in the second direction N2, and the force E of the damper 35 increases in pushing the first wall 42 in the first direction N1. Consequently, when the clutch weight 25 rocks in the first direction N1 from the first contact position P1, the force of the damper 35 conveniently increases in pushing the recess 41 in the second direction N2. When the clutch weight 25 rocks in the second direction N2 from the first contact position P1, the force of the damper 35 conveniently increases in pushing the recess 41 in the first direction N1. Therefore, the damper 35 can restrain, with increased effect, the clutch weight 25 in the first contact position P1 from subtly vibrating about the pivot member 23.

When the clutch weight 25 rocks in the first direction N1 from the first contact position P1, the force of the recess 41 decreases in compressing the damper 35 in the second direction N2, and the force of the damper 35 decreases in pushing the recess 41 in the first direction N1. When the clutch weight 25 rocks in the second direction N2 from the first contact position P1, the force of the recess 41 decreases in compressing the damper 35 in the first direction N1, and the force of the damper 35 decreases in pushing the recess 41 in the second direction N2. Consequently, the damper 35 can restrain, with increased effect, the clutch weight 25 from rocking in the first direction N1 from the first contact position P1. Further, the damper 35 can restrain, with increased effect, the clutch weight 25 from rocking in the second direction N2 from the first contact position P1. Therefore, the damper 35 can restrain, with increased effect, the clutch weight 25 in the first contact position P1 from subtly vibrating about the pivot member 23.

When the clutch weight 25 rocks in the first direction N1 from the first contact position P1, the force of the first wall 42 decreases in compressing the damper 35 in the second direction N2, and the force E of the damper 35 decreases in pushing the first wall 42 in the first direction N1. When the clutch weight 25 rocks in the second direction N2 from the first contact position P1, the force of the second wall 43 decreases in compressing the damper 35 in the first direction N1, and the force F of the damper 35 decreases in pushing the second wall 43 in the second direction N2. Consequently, when the clutch weight 25 rocks in the first direction N1 from the first contact position P1, the force of the damper 35 conveniently decreases in pushing the recess 41 in the first direction N1. When the clutch weight 25 rocks in the second direction N2 from the first contact position P1, the force of the damper 35 conveniently decreases in pushing the recess 41 in the second direction N2. Therefore, the damper 35 can restrain, with increased effect, the clutch weight 25 in the first contact position P1 from subtly vibrating about the pivot member 23.

When the clutch weight 25 rocks in the first direction N1 from the first contact position P1, the force of the damper 35 pushing the recess 41 in the second direction N2 becomes stronger than the force of the damper 35 pushing the recess 41 in the first direction N1. Consequently, the damper 35 can restrain, with increased effect, the clutch weight 25 from rocking in the first direction N1 from the first contact position P1.

When the clutch weight 25 rocks in the first direction N1 from the first contact position P1, the force F of the damper 35 pushing the second wall 43 in the second direction N2 becomes stronger than the force E of the damper 35 pushing the first wall 42 in the first direction N1. Consequently, the damper 35 can restrain, with increased effect, the clutch weight 25 from rocking in the first direction N1 from the first contact position P1.

When the clutch weight 25 rocks in the second direction N2 from the first contact position P1, the force of the damper 35 pushing the recess 41 in the first direction N1 becomes stronger than the force of the damper 35 pushing the recess 41 in the second direction N2. Consequently, the damper 35 can restrain, with increased effect, the clutch weight 25 from rocking in the second direction N2 from the first contact position P1.

When the clutch weight 25 rocks in the second direction N2 from the first contact position P1, the force E of the damper 35 pushing the first wall 42 in the first direction N1 becomes stronger than the force F of the damper 35 pushing the second wall 43 in the second direction N2. Consequently, the damper 35 can restrain, with increased effect, the clutch weight 25 from rocking in the second direction N2 from the first contact position P1.

When the clutch weight 25 is located in the first contact position P1, the first wall 42 and second wall 43 contact the damper 35, respectively. Consequently, when the clutch weight 25 rocks from the first contact position P1 about the pivot member 23, the damper 35 can promptly suppress the rocking of the clutch weight 25. The damper 35 can restrain, with increased effect, the clutch weight 25 from subtly vibrating in the first contact position P1. For example, the juddering of the centrifugal clutch 17 can also be suppressed, with increased effect, immediately after the clutch weight 25 reaches the first contact position P1.

When the clutch weight 25 is located in the first contact position P1, the first wall 42 compresses the damper 35 in the second direction N2, and the damper 35 pushes the first wall 42 in the first direction N1. When the clutch weight 25 is located in the first contact position P1, the second wall 43 compresses the damper 35 in the first direction N1, and the damper 35 pushes the second wall 43 in the second direction N2. In other words, when the clutch weight 25 is located in the first contact position P1, the damper 35 is in a state of being compressed by both the first wall 42 and second wall 43. Consequently, when the clutch weight 25 is located in the first contact position P1, the damper 35 pushes the first wall 42 in the first direction N1 and the second wall 43 in the second direction N2. Regardless of whether or not the clutch weight 25 rocks in the first contact position P1 about the pivot member 23, the damper 35 pushes the first wall 42 in the first direction N1 and the second wall 43 in the second direction N2. Consequently the damper 35 can conveniently prevent the clutch weight 25 from subtly vibrating in the first contact position P1 about the pivot member 23. The damper 35 can therefore conveniently prevent the juddering of the centrifugal clutch 17.

When the clutch weight 25 is in the origin position P0, the recess 41 compresses the damper 35 in the second direction N2, and the damper 35 pushes the recess 41 in the first direction N1. Consequently, the clutch weight 25 can smoothly rock in the first direction N1 from the origin position P0. The clutch weight 25 can therefore smoothly rock from the origin position P0 to the first contact position P1.

When the clutch weight 25 is in the origin position P0, the first wall 42 compresses the damper 35 in the second direction N2, and the damper 35 pushes the first wall 42 in the first direction N1. Consequently, when the clutch weight 25 is located in the origin position P0, the recess 41 can conveniently compress the damper 35 in the second direction N2, and the damper 35 can conveniently push the recess 41 in the first direction N1.

When the clutch weight 25 is located in the origin position P0, the force E of the damper 35 pushing the first wall 42 in the first direction N1 is stronger than the force F of the damper 35 pushing the second wall 43 in the second direction N2. That is, force E0 is stronger than force F0. Here, force F0 is the force F of the damper 35 pushing the second wall 43 when the clutch weight 25 is located in the origin position P0. Consequently, the clutch weight 25 can rock, with increased smoothness, from the origin position P0 to the first contact position P1.

When the clutch weight 25 is located in the origin position P0, the second wall 43 does not compress the damper 35, and the damper 35 does not push the second wall 43. Consequently, when the clutch weight 25 is located in the origin position P0, the damper 35 does not push the recess 41 in the second direction N2. The clutch weight 25 can therefore rock, with increased smoothness, from the origin position P0 to the first contact position P1.

When the clutch weight 25 is located in the origin position P0, the first wall 42 contacts the damper 35, and the second wall 43 is separated from the damper 35. Consequently, the clutch weight 25 can rock, with increased smoothness, from the origin position P0 to the first contact position P1.

The damper 35 has the center point C2 as seen from the direction of axis A2. The recess 41 has the center line H as seen from the direction of axis A2. When the clutch weight 25 is located in the first contact position P1, as seen from the direction of axis A2, the center point C2 of the damper 35 is located on the center line H of the recess 41. Consequently, even when the clutch weight 25 in the first contact position P1 vibrates about the pivot member 23, the damper 35 can conveniently return the clutch weight 25 to the first contact position P1. Even when the clutch weight 25 in the first contact position P1 vibrates about the pivot member 23, the damper 35 can conveniently settle the clutch weight 25 in the first contact position P1. Even when the clutch weight 25 in the first contact position P1 vibrates about the pivot member 23, the damper 35 can conveniently maintain the clutch weight 25 in the first contact position P1.

When the clutch weight 25 is located in the origin position P0, as seen from the direction of axis A2, the distance between the center point C2 of the damper 35 and the first wall 42 is shorter than the distance between the center point C2 of the damper 35 and the second wall 43. In short, when the clutch weight 25 is located in the origin position P0, the damper 35 is close to the first wall 42. Consequently, when the clutch weight 25 is located in the origin position P0, the first wall 42 can conveniently compress the damper 35 in the second direction N2, and the damper 35 can conveniently push the first wall 42 in the first direction N1.

When the clutch weight 25 is located in the first contact position P1, the first wall 42 compresses the damper 35 in the second direction N2, the damper 35 pushes the first wall 42 in the first direction N1, the second wall 43 compresses the damper 35 in the first direction N1, and the damper 35 pushes the second wall 43 in the second direction N2. Further, when the clutch weight 25 is located in the first contact position P1, as seen from the direction of axis A2, the center point C2 of the damper 35 is located on the center line H of the recess 41. Consequently, regardless of whether or not the clutch weight 25 in the first contact position P1 rocks about the pivot member 23, the damper 35 pushes the first wall 42 in the first direction N1 and the second wall 43 in the second direction N2. Further, when the clutch weight 25 is located in the first contact position P1, the force E of the damper 35 pushing the first wall 42 in the first direction N1 substantially balances with the force F of the damper 35 pushing the second wall 43 in the second direction N2. That is, force E1 substantially balances with force F1. The damper 35 can therefore prevent the clutch weight 25, with increased effect, from subtly vibrating about the pivot member 23 in the first contact position P1. Even when the clutch weight 25 vibrates in the first contact position P1, the damper 35 can, with increased convenience, return the clutch weight 25 to the first contact position P1. Even when the clutch weight 25 vibrates in the first contact position P1, the damper 35 can, with increased convenience, settle the clutch weight 25 in the first contact position P1. Even when the clutch weight 25 vibrates in the first contact position P1, the damper 35 can, with increased convenience, maintain the clutch weight 25 in the first contact position P1.

The pivot member 23 has the center point C1 as seen from the direction of axis A2. The damper 35 has the center point C2 as seen from the direction of axis A2. The boundary line B connects the center point C1 and center point C2 as seen from the direction of axis A2. The damper 35 includes a first portion 36 and a second portion 37. The first portion 36 and second portion 37 are divided by the boundary line B as seen from the direction of axis A2. A seen from the direction of axis A2, the first portion 36 is located in the first direction N1 relative to the boundary line B. As seen from the direction of axis A2, the second portion 37 is located in the second direction N2 relative to the boundary line B. The first wall 42 can contact the first portion 36. The second wall 43 can contact the second portion 37. Consequently, when the clutch weight 25 rocks in the first direction N1, the second wall 43 can compress the second portion 37 in the first direction N1, and the second portion 37 can push the second wall 43 in the second direction N2. The damper 35 can therefore effectively restrain the clutch weight 25 from rocking in the first direction N1. Further, when the clutch weight 25 rocks in the second direction N2, the first wall 42 can compress the first portion 36 in the second direction N2, and the first portion 36 can push the first wall 42 in the first direction N1. The damper 35 can therefore effectively restrain the clutch weight 25 from rocking in the second direction N2. Consequently, the damper 35 can effectively restrain the clutch weight 25 from subtly vibrating about the pivot member 23.

When the clutch weight 25 is located in the first contact position P1, the first wall 42 contacts the first portion 36, and the second wall 43 contacts the second wall 37. Consequently, the first portion 36 and second portion 37 can promptly restrain the clutch weight 25 from subtly vibrating about the pivot member 23 in the first contact position P1. For example, the juddering of the centrifugal clutch 17 can also be suppressed, with increased effect, immediately after the clutch weight 25 reaches the first contact position P1.

When the clutch weight 25 is located in the first contact position P1, the first wall 42 compresses the first portion 36 in the second direction N2, and the first portion 36 pushes the first wall 42 in the first direction N1. When the clutch weight 25 is located in the first contact position P1, the second wall 43 compresses the second portion 37 in the first direction N1, and the second portion 37 pushes the second wall 43 in the second direction N2. Consequently, when the clutch weight 25 is located in the first contact position P1, the damper 35 conveniently pushes the first wall 42 in the first direction N1, and conveniently pushes the second wall 43 in the second direction N2. Regardless of whether or not the clutch weight 25 rocks about the pivot member 23 in the first contact position P1, the damper 35 conveniently pushes the first wall 42 in the first direction N1 and the second wall 43 in the second direction N2. The damper 35 can therefore conveniently prevent the clutch weight 25 from subtly vibrating about the pivot member 23 in the first contact position P1. Thus, the damper 35 can conveniently prevent the juddering of the centrifugal clutch 17.

The straddled vehicle 1 includes the centrifugal clutch 17 described above. According to the straddled vehicle 1, therefore, the juddering of the centrifugal clutch 17 can be suppressed conveniently.

The straddled vehicle 1 includes the engine 6. The engine 6 generates rotating power. The centrifugal clutch 17 receives the rotating power of the engine 6. Therefore, even when the rotating torque outputted from the engine 6 subtly fluctuates, the damper 35 can effectively restrain the clutch weight 25 from subtly vibrating about the pivot member 23. Consequently, even when the centrifugal clutch 17 receives the rotating power of the engine 6, the juddering of the centrifugal clutch 17 can be suppressed conveniently.

Further, even when the rotating torque outputted from the engine 6 subtly fluctuates, it is possible to effectively suppress subtle fluctuations of transmitted torque of the centrifugal clutch 17.

The straddled vehicle 1 includes the rear wheel 9. The centrifugal clutch 17 connects and disconnects transmission of the rotating power from the engine 6 to the rear wheel 9. The centrifugal clutch 17 can therefore transmit the rotating power from the engine 6 to the rear wheel 9, while conveniently suppressing the juddering of the centrifugal clutch 17.

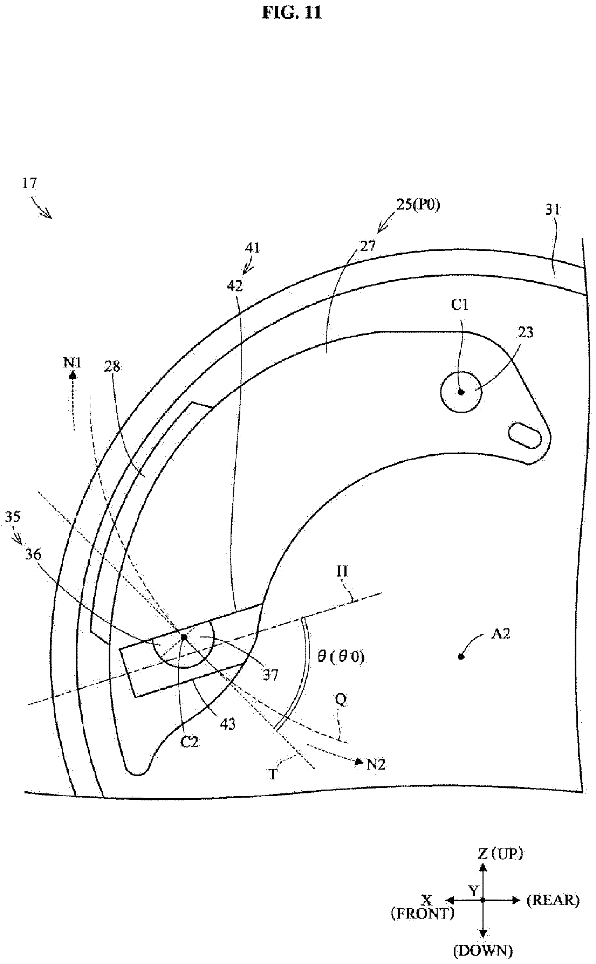

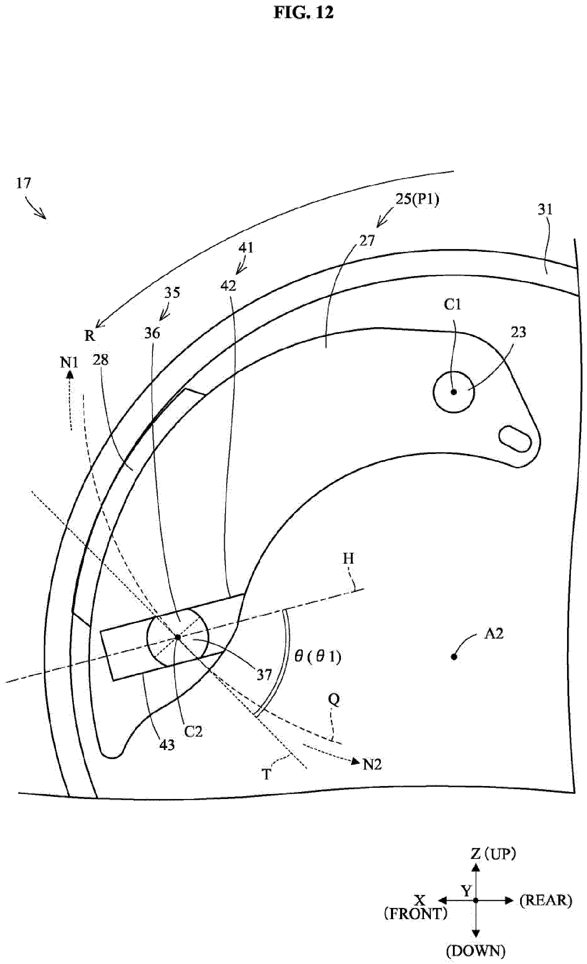

The foregoing embodiment may be modified as follows:
(1) In the embodiment, as seen from the direction of axis A2, angle θ formed between the recess 41 and first tangent line T is approximately 90 degrees. However, angle θ may be changed as appropriate. Two modified embodiments will be shown by way of example.
(1-1) Figs. 11 and 12 are left side views of a centrifugal clutch 17 in a modified embodiment, respectively. Components identical to those of the embodiment are shown with the same signs, and will not particularly be described. In the modified embodiment shown in Figs. 11 and 12, angle θ is approximately 60 degrees.

Fig. 11 shows the clutch weight 25 located in the origin position P0. When the clutch weight 25 is located in the origin position P0 also, as seen from the direction of axis A2, angle θ formed between the recess 41 and first tangent line T is approximately 60 degrees. That is, angle θ0 is approximately 60 degrees.

As seen from the direction of axis A2, the recess 41 crosses the first arc Q. When the clutch weight 25 is located in the origin position P0 also, as seen from the direction of axis A2, the recess 41 crosses the first arc Q.

When the clutch weight 25 is located in the origin position P0, the first wall 42 compresses the damper 35 in the second direction N2, and the damper 35 pushes the first wall 42 in the first direction N1. When the clutch weight 25 is located in the origin position P0, the second wall 43 is separated from the damper 35, and the damper 35 does not push the second wall 43.

Fig. 12 shows the clutch weight 25 located in the first contact position P1. When the clutch weight 25 is located in the first contact position P1 also, angle θ is approximately 60 degrees. That is, angle θ1 is approximately 60 degrees.

As seen from the direction of axis A2, the recess 41 crosses the first arc Q. When the clutch weight 25 is located in the first contact position P1 also, as seen from the direction of axis A2, the recess 41 crosses the first arc Q.

When the clutch weight 25 is located in the first contact position P1, the first wall 42 compresses the damper 35 in the second direction N2, and the damper 35 pushes the first wall 42 in the first direction N1. When the clutch weight 25 is located in the first contact position P1, the second wall 43 compresses the damper 35 in the first direction N1, and the damper 35 pushes the second wall 43 in the second direction N2.

With this modified embodiment also, the damper 35 can conveniently suppress the subtle vibration of the clutch weight 25.

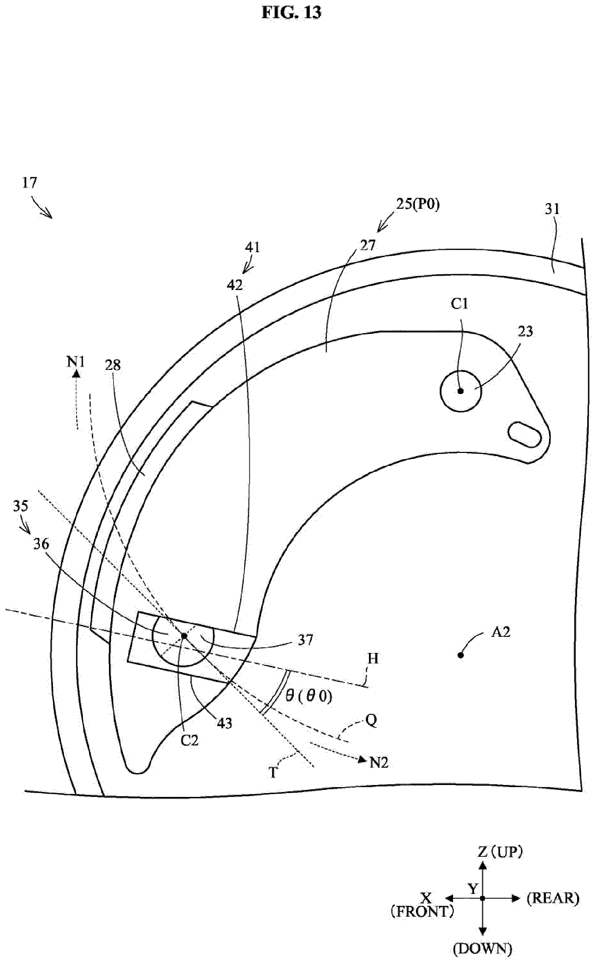

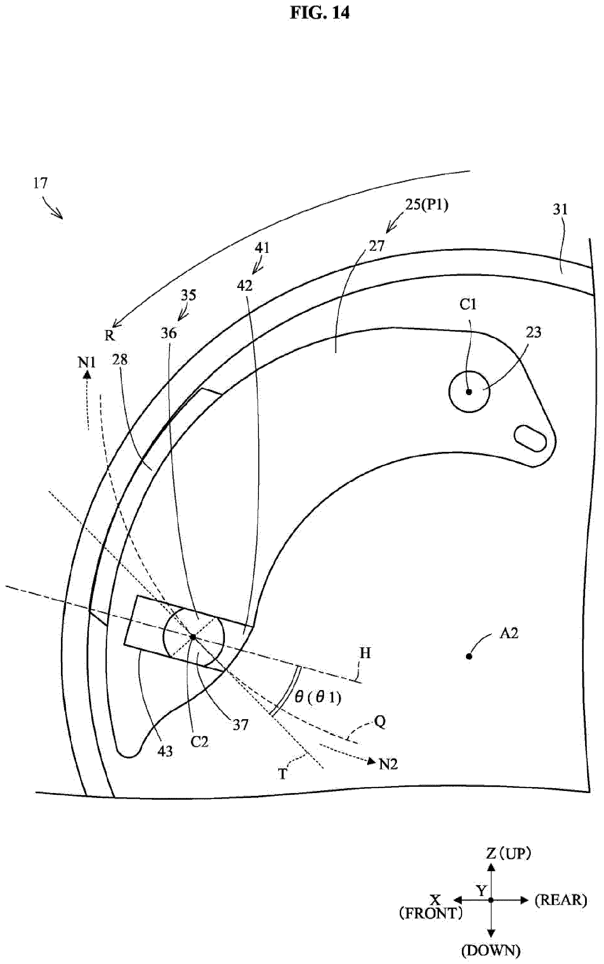

(1-2) Figs. 13 and 14 are left side views of a centrifugal clutch 17 in a modified embodiment, respectively. Components identical to those of the embodiment are shown with the same signs, and will not particularly be described. In the modified embodiment shown in Figs. 13 and 14, angle θ is approximately 30 degrees.

Fig. 13 shows the clutch weight 25 located in origin position P0. Even when the clutch weight 25 is located in origin position P0, as seen from the direction of axis A2, angle θ formed between the recess 41 and first tangent line T is approximate 30 degrees. That is, angle θ0 is approximately 30 degrees.

As seen from the direction of axis A2, the recess 41 crosses the first arc Q. Even when the clutch weight 25 is located in the origin position P0, as seen from the direction of axis A2, the recess 41 crosses the first arc Q.

When the clutch weight 25 is located in the origin position P0, the first wall 42 compresses the damper 35 in the second direction N2, and the damper 35 pushes the first wall 42 in the first direction N1. When the clutch weight 25 is located in the origin position P0, the second wall 43 is separated from the damper 35, and the damper 35 does not push the second wall 43.

Fig. 14 shows the clutch weight 25 located in the first contact position P1. When the clutch weight 25 is located in the first contact position P1 also, angle θ is approximately 30 degrees. That is, angle θ1 is approximately 30 degrees.

As seen from the direction of axis A2, the recess 41 crosses the first arc Q. When the clutch weight 25 is located in the first contact position P1 also, as seen from the direction of axis A2, the recess 41 crosses the first arc Q.

When the clutch weight 25 is located in the first contact position P1, the first wall 42 compresses the damper 35 in the second direction N2, and the damper 35 pushes the first wall 42 in the first direction N1. When the clutch weight 25 is located in the first contact position P1, the second wall 43 compresses the damper 35 in the first direction N1, and the damper 35 pushes the second wall 43 in the second direction N2.

With this modified embodiment also, the damper 35 can conveniently suppress the subtle vibration of the clutch weight 25.

In particular, when angle θ is between 30 and 60 degrees inclusive, the recess 41 can appropriately compress the damper 35. Specifically, since angle θ is 30 degrees or more, when the clutch weight 25 rocks about the pivot member 23, the recess 41 can effectively compress the damper 35. Since angle θ is 60 degrees or less, when the clutch weight 25 rocks about pivot member 23, the recess 41 does not compress the damper 35 to excess. The damper 35 can therefore appropriately suppress the subtle vibration of the clutch weight 25.

(2) In the embodiment, the clutch weight 25 is immovable circumferentially of the axis A2 relative to the pivot member 23. However, the clutch weight 25 may be movable circumferentially of the axis A2 relative to the pivot member 23.

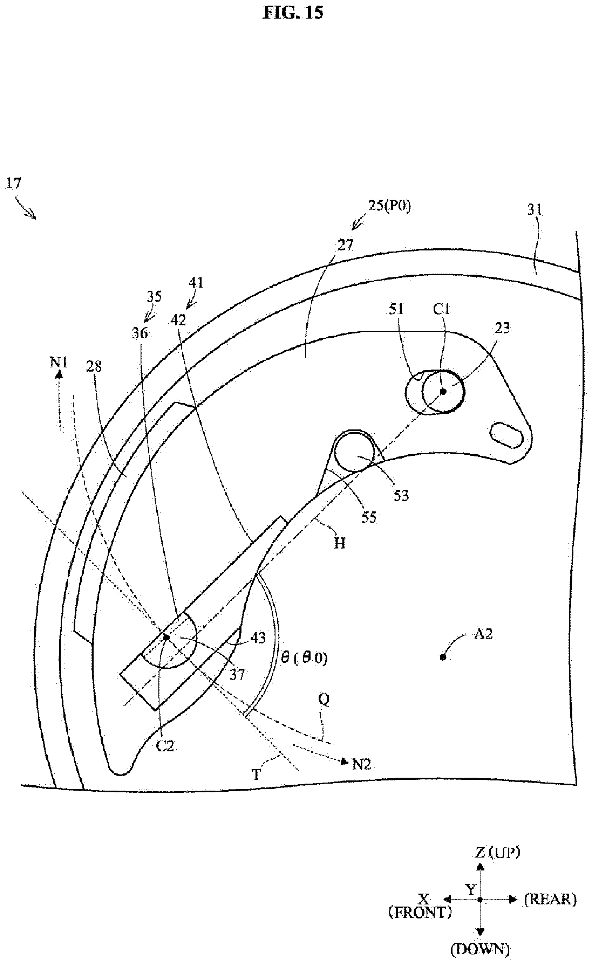

Figs. 15, 16, and 17 are left side views of a portion of the centrifugal clutch 17 in a modified embodiment, respectively. Components identical to those of the embodiment are shown with the same signs, and will not particularly be described. Figs. 15, 16, and 17 omit illustration of the drive plate 21, respectively.

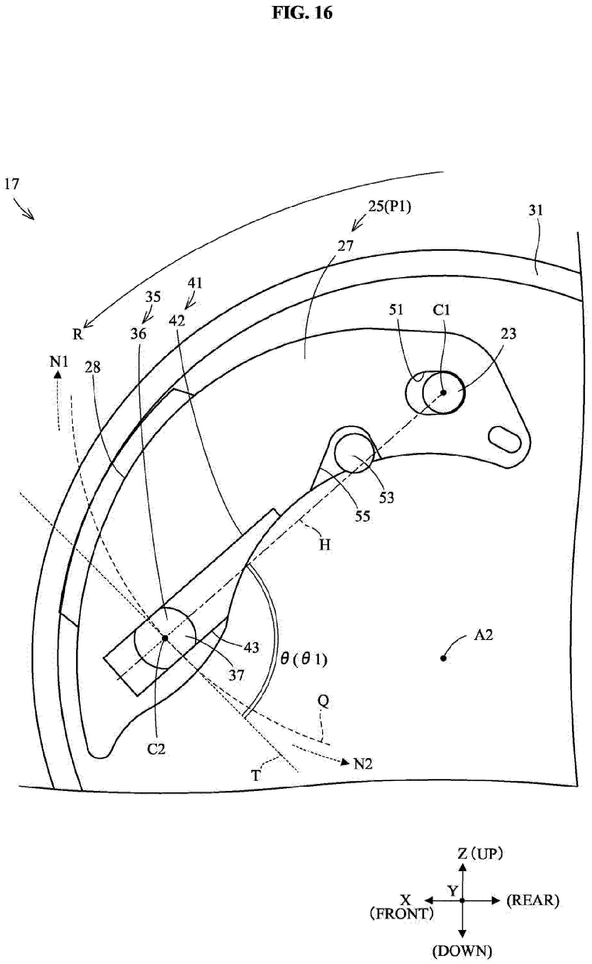

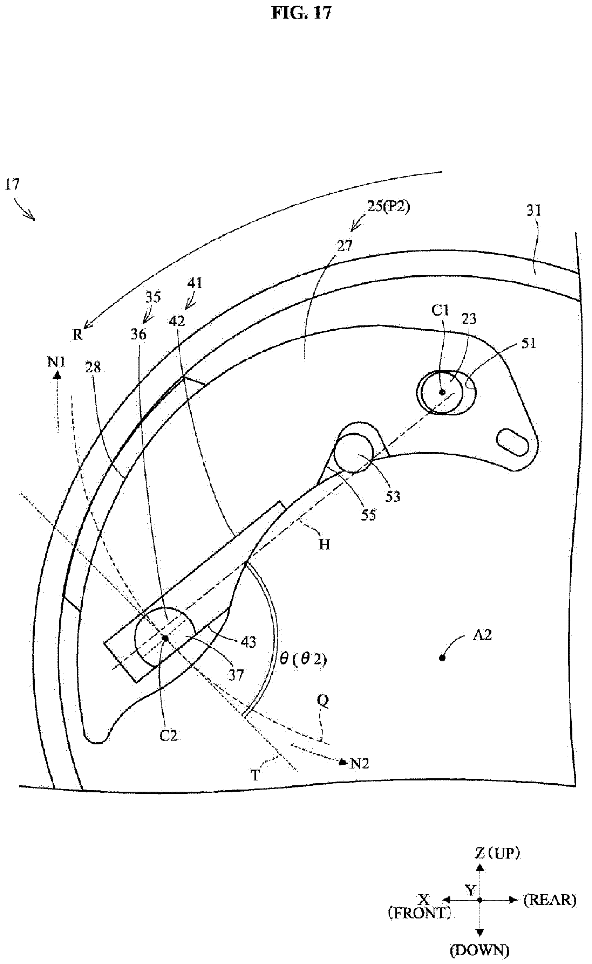

In this modified embodiment, the clutch weight 25 is movable to a second contact position P2 in addition to the origin position P0 and first contact position P1. Fig. 15 shows the clutch weight 25 located in the origin position P0. Fig. 16 shows the clutch weight 25 located in the first contact position P1. Fig. 17 shows the clutch weight 25 located in the second contact position P2.

The clutch weight 25 has a through-hole 51. The through-hole 51 is a long hole. The through-hole 51, as seen from the direction of axis A2, extends circumferentially of the axis A2. The pivot member 23 is inserted in the through-hole 51.

The centrifugal clutch 17 has one or more (e.g. three) cams 53. The cams 53 are supported by the drive plate 21. The cams 53 rotate integrally with the drive plate 21. The cams 53 rotate about the axis A2.

The clutch weight 25 has a driven wall 55. The driven wall 55 is located radially outward of the axis A2 relative to the cam 53. The cam 53 can contact the driven wall 55.

Reference is made to Fig. 15. In Fig. 15, the rotating speed of the drive plate 21 is zero. The clutch weight 25 is located in the origin position P0. The clutch weight 25 does not contact the clutch housing 31.

As seen from the direction of axis A2, the recess 41 crosses the first arc Q. Even when the clutch weight 25 is located in the origin position P0, as seen from the direction of axis A2, the recess 41 crosses the first arc Q.

Reference is made to Figs. 15 and 16. In Fig. 16, the drive plate 21 rotates about the axis A2. The drive plate 21 rotates in the direction of rotation R. The clutch weight 25 rotates about the axis A2. The clutch weight 25 further rocks about the pivot member 23. When the clutch weight 25 rocks about the pivot member 23, the clutch weight 25 moves from the origin position P0 to the first contact position P1. When the clutch weight 25 moves from the origin position P0 to the first contact position P1, the clutch weight 25 does not move circumferentially of the axis A2 relative to the pivot member 23.

Reference is made to Fig. 16. When the clutch weight 25 is located in the first contact position P1, the clutch weight 25 contacts the clutch housing 31.

As seen from the direction of axis A2, the recess 41 crosses the first arc Q. When the clutch weight 25 located in the first contact position P1 also, as seen from the direction of axis A2, the recess 41 crosses the first arc Q.

Reference is made to Figs. 16 and 17. When the clutch weight 25 rotates about the axis A2 in the first contact position P1, the clutch weight 25 receives a reaction force from the clutch housing 31. With the reaction force acting on the clutch weight 25, the clutch weight 25 moves about the axis A2 relative to the pivot member 23. Specifically, the clutch weight 25 moves in a direction opposite to the direction of rotation R relative to the pivot member 23. When the clutch weight 25 moves circumferentially of the axis A2 relative to the pivot member 23, the clutch weight 25 moves from the first contact position P1 to the second contact position P2. When the clutch weight 25 moves from the first contact position P1 to the second contact position P2, the clutch weight 25 slides relative to the clutch housing 31. When the clutch weight 25 moves from the first contact position P1 to the second contact position P2, the cam 53 pushes the driven wall 55 in the first direction N1. When the clutch weight 25 moves from the first contact position P1 to the second contact position P2, the cam 53 pushes the driven wall 55 radially outward of the axis A2.

Reference is made to Fig. 17. When the clutch weight 25 is located in the second contact position P2, the clutch weight 25 contacts the clutch housing 31. When the clutch weight 25 is located in the second contact position P2, the cam 53 pushes the driven wall 55 in the first direction N1. The cam 53 restricts the clutch weight 25 rocking in the second direction N2 from the second contact position P2.

As seen from the direction of axis A2, the recess 41 crosses the first arc Q. When the clutch weight 25 is located in the second contact position P2 also, as seen from the direction of axis A2, the recess 41 crosses the first arc Q.

With this modified embodiment also, the damper 35 can conveniently restrain the clutch weight 25 from vibrating about the pivot member 23. The damper 35 can conveniently restrain the clutch weight 25 from vibrating in the first contact position P1. When the clutch weight 25 moves from the first contact position P1 to the second contact position P2, the damper 35 and cam 53 can restrain the clutch weight 25 from vibrating about the pivot member 23. The damper 35 and cam 53 can restrain the clutch weight 25 from vibrating in the second contact position P2.

When the clutch weight 25 is located in the second contact position P2, the cam 53 restricts the clutch weight 25 rocking in the second direction N2 from the second contact position P2. Consequently, when the clutch weight 25 is located in the second contact position P2, the damper 35 may not suppress the clutch weight 25 rocking in the second direction N2 from the second contact position P2. For example, when the clutch weight 25 is located in the second contact position P2, the damper 35 may not push the recess 41 in the first direction N1. For example, when the clutch weight 25 is located in the second contact position P2, the recess 41 may not compress the damper 35 in the second direction N2. For example, when the clutch weight 25 is located in the second contact position P2, the damper 35 may not push the first wall 42 in the first direction N1. For example, when the clutch weight 25 is located in the second contact position P2, the first wall 42 may not compress the damper 35. For example, when the clutch weight 25 is located in the second contact position P2, the first wall 42 may be separated from the damper 35.

(3) In the embodiment, the whole recess 41 extends linearly as seen from the direction of axis A2. However, for example, the whole recess 41 may extend in a curving line as seen from the direction of axis A2. For example, the recess 41 may include a straight portion extending linearly, and a curve portion extending in a curving line, as seen from the direction of axis A2.

(4) In the embodiment, the whole first wall 42 extends linearly as seen from the direction of axis A2. However, for example, the whole first wall 42 may extend in a curving line as seen from the direction of axis A2. For example, the first wall 42 may include a straight portion extending linearly, and a curve portion extending in a curving line, as seen from the direction of axis A2.

(5) In the embodiment, the whole second wall 43 extends linearly as seen from the direction of axis A2. However, for example, the whole second wall 43 may extend in a curving line as seen from the direction of axis A2. For example, the second wall 43 may include a straight portion extending linearly, and a curve portion extending in a curving line, as seen from the direction of axis A2.

(6) In the embodiment, the first wall 42 and second wall 43 are parallel to each other. However, the first wall 42 and second wall 43 may not be parallel to each other.

(7) In the embodiment, the distance G is slightly smaller than the outside diameter D of the damper 35. However, the distance G may be the same as the outside diameter D of the damper 35. The distance G may be slightly larger than the outside diameter D of the damper 35.

(8) In the embodiment, the distance G is substantially constant over the direction in which the center line H extends. However, the distance G may change along the direction in which the center line H extends. For example, the distance G may increase toward the inner surface 27a of the weight body 27.

(9) In the embodiment, when the clutch weight 25 is located in the first contact position P1, the recess 41 compresses the damper 35. However, for example, when the clutch weight 25 is located in the first contact position P1, the recess 41 may not compress the damper 35. For example, when the clutch weight 25 is located in the first contact position P1, at least either one of the first wall 42 and second wall 43 may not compress the damper 35. For example, when the clutch weight 25 is located in the first contact position P1, the recess 41 may contact the damper 35 without compressing the damper 35. For example, when the clutch weight 25 is located in the first contact position P1, at least either one of the first wall 42 and second wall 43 may contact the damper 35 without compressing the damper 35. For example, when the clutch weight 25 is located in the first contact position P1, the recess 41 may be close to the damper 35 without contacting the damper 35. For example, when the clutch weight 25 is located in the first contact position P1, at least either one of the first wall 42 and second wall 43 may be close to the damper 35 without contacting the damper 35.

(10) In the embodiment, when the clutch weight 25 is located in the origin position P0, the second wall 43 is separated from the damper 35. However, when the clutch weight 25 is located in the origin position P0, the second wall 43 may contact the damper 35. For example, when the clutch weight 25 is located in the origin position P0, the second wall 43 may compress the damper 35. For example, when the clutch weight 25 is located in the origin position P0, the damper 35 may push the second wall 43.

(11) In the embodiment, when the clutch weight 25 rocks from the origin position P0 to the first contact position P1, the recess 41 may slide relative to the damper 35. Or when the clutch weight 25 rocks from the origin position P0 to the first contact position P1, the recess 41 may not slide relative to the damper 35.

In the modified embodiment shown in Figs. 15 to 17, when the clutch weight 25 moves from the first contact position P1 to the second contact position P2, the recess 41 may slide relative to the damper 35. Or when the clutch weight 25 moves from the first contact position P1 to the second contact position P2, the recess 41 may not slide relative to the damper 35.

(12) In the embodiment, the first wall 42 contacts the first portion 36 without contacting the second portion 37. However, the first wall 42 may be able to contact both the first portion 36 and second portion 37. In the modified embodiments shown in Figs. 11 and 13, the first wall 42 contacts both the first portion 36 and second portion 37.

(13) In the embodiment, the second wall 43 contacts the second portion 37 without contacting the first portion 36. However, the second wall 43 may be able to contact both the first portion 36 and second portion 37.

(14) In the embodiment, as seen from the direction of axis A2, the first wall 42 and second wall 43 cross the first arc Q, respectively. However, either the first wall 42 or the second wall 43 may not cross the first arc Q. In short, at least one of the first wall 42 and second wall 43 may cross the first arc Q. In the modified embodiment shown in Figs. 13 and 14, as seen from the direction of axis A2, the first wall 42 crosses the first arc Q. However, as seem from the direction of axis A2, the second wall 43 does not cross the first arc Q.

(15) In the embodiment, the centrifugal clutch 17 is provided in the power transmitting path between the engine 6 and rear wheel 9. However, the centrifugal clutch 17 may be provided in other power transmitting paths.

(16) In the embodiment, the straddled vehicle 1 has been illustrated as an example of scooter type vehicles. However, the straddled vehicle 1 may be changed to vehicles of other types, such as the street type, sport type, off-road type, or a vehicle for irregular grounds (ALL-TERRAIN VEHICLE).

(17) In the embodiment, the number of front wheels 3 of the straddled vehicle 1 is one. However, the number of front wheels 3 of the straddled vehicle 1 may be two. In the foregoing embodiment, the number of rear wheels 9 of the straddled vehicle 1 is one. However, the number of rear wheels 9 of the straddled vehicle 1 may be two.

(18) In the embodiment, the straddled vehicle 1 includes the engine 6 (internal combustion engine) as power source. However, for example, the straddled vehicle 1 may have an electric motor as power source, besides the engine 6.

(19) The foregoing embodiment and each of the modified embodiments described in paragraphs (1) to (18) above may be further varied as appropriate by replacing or combining their constructions with the constructions of the other modified embodiments.

## Claims

1. A centrifugal clutch (17) comprising:
a drive plate (21) rotatable about a first axis (A2);
a pivot member (23) supported by the drive plate (21);
a clutch weight (25) supported by the pivot member (23) to be rockable about the pivot member (23);
a clutch housing (31) located radially outward of the first axis (A2) relative to the clutch weight (25) to be capable of contacting the clutch weight (25),
a damper (35) supported by the drive plate (21);
wherein the clutch weight (25) has a recess (41) capable of contacting the damper (35); and
the recess (41) includes:
a first wall (42) capable of contacting the damper (35); and
a second wall (43) located in a position facing the first wall (42) and spaced from the first wall (42) to be capable of contacting the damper (35); and
wherein the damper (35) is located in a space (S) formed between the first wall (42) and the second wall (43), **characterized in that** as seen from the direction of the first axis (A2), the recess (41) crosses a first arc (Q) centering on the center point (C1) of the pivot member (23) and passing through the center point (C2) of the damper (35) in natural state, and
at least one of the first wall (42) and the second wall (43) crosses the first arc (Q).

2. The centrifugal clutch (17) according to claim 1, **characterized in that** the recess (41), as seen from the direction of the first axis (A2), has a center line (H) consisting of a continuation of halfway points between the first wall (42) and the second wall (43); and as seen from the direction of the first axis (A2), the center line (H) crosses the first arc (Q).

3. The centrifugal clutch (17) according to claim 1 or 2, **characterized in that** as seen from the direction of the first axis (A2), the recess (41) extends linearly; and
as seen from the direction of the first axis (A2), the recess (41) forms an angle (θ) larger than 0 degree with a first tangent line (T) which contacts the first arc (Q) in a position of the damper (35), preferably, as seen from the direction of the first axis (A2), the angle (θ) formed between the recess (41) and the first tangent line (T) is 90 degrees or less.

4. The centrifugal clutch (17) according to any one of claims 1 to 3, **characterized in that** when a rotating speed of the drive plate (21) is zero, the clutch weight (25) is in an origin position (P0) in which the clutch weight (25) is out of contact with the clutch housing (31);
the clutch weight (25), by rocking about the pivot member (23), is configured to move from the origin position (P0) to a first contact position (P1) for contacting the clutch housing (31);
a direction of movement about the pivot member (23) from the origin position (P0) to the first contact position (P1) is termed a first direction (N1);
a direction of movement about the pivot member (23) from the first contact position (P1) to the origin position (P0) is termed a second direction (N2);
when the clutch weight (25) rocks in the first direction (N1) from the first contact position (P1), the recess (41) compresses the damper (35) in the first direction (N1), and the damper (35) pushes the recess (41) in the second direction (N2); and
when the clutch weight (25) rocks in the second direction (N2) from the first contact position (P1), the recess (41) compresses the damper (35) in the second direction (N2), and the damper (35) pushes the recess (41) in the first direction (N1).

5. The centrifugal clutch (17) according to claim 4, **characterized in that,** when the clutch weight (25) is located in the origin position (P0), the recess (41) compresses the damper (35) in the second direction (N2), and the damper (35) pushes the recess (41) in the first direction (N1).

6. The centrifugal clutch (17) according to claim 1 and 4 or 5, **characterized in that** when the clutch weight (25) rocks in the first direction (N1) from the first contact position (P1), the second wall (43) compresses the damper (35) in the first direction (N1), and the damper (35) pushes the second wall (43) in the second direction (N2); and
when the clutch weight (25) rocks in the second direction (N2) from the first contact position (P1), the first wall (42) compresses the damper (35) in the second direction (N2), and the damper (35) pushes the first wall (42) in the first direction (N1).

7. The centrifugal clutch (17) according to claim 6, **characterized in that** when the clutch weight (25) rocks in the first direction (N1) from the first contact position (P1), the force of the second wall (43) increases in compressing the damper (35) in the first direction (N1), and the force (F) of the damper (35) increases in pushing the second wall (43) in the second direction (N2); and
when the clutch weight (25) rocks in the second direction (N2) from the first contact position (P1), the force of the first wall (42) increases in compressing the damper (35) in the second direction (N2), and the force (E) of the damper (35) increases in pushing the first wall (42) in the first direction (N1).

8. The centrifugal clutch (17) according to claim 6 or 7, **characterized in that** when the clutch weight (25) rocks in the first direction (N1) from the first contact position (P1), the force of the first wall (42) decreases in compressing the damper (35) in the second direction (N2), and the force (E) of the damper (35) decreases in pushing the first wall (42) in the first direction (N1); and
when the clutch weight (25) rocks in the second direction (N2) from the first contact position (P1), the force of the second wall (43) decreases in compressing the damper (35) in the first direction (N1), and the force (F) of the damper (35) decreases in pushing the second wall (43) in the second direction (N2).

9. The centrifugal clutch (17) according to any one of claims 6 to 8, **characterized in that,** when the clutch weight (25) is located in the first contact position (P1), the first wall (42) and the second wall (43) contact the damper (35), respectively.

10. The centrifugal clutch (17) according to any one of claims 6 to 9, **characterized in that,** when the clutch weight (25) is located in the first contact position (P1), the first wall (42) compresses the damper (35) in the second direction (N2), the damper (35) pushes the first wall (42) in the first direction (N1), the second wall (43) compresses the damper (35) in the first direction (N1), and the damper (35) pushes the second wall (43) in the second direction (N2).

11. The centrifugal clutch (17) according to any one of claims 6 to 10, **characterized in that,** when the clutch weight (25) is located in the origin position (P0), the first wall (42) compresses the damper (35) in the second direction (N2), and the damper (35) pushes the first wall (42) in the first direction (N1).

12. The centrifugal clutch (17) according to any one of claims 6 to 11, **characterized in that**
the recess (41), as seen from the direction of the first axis (A2), has a center line (H) consisting of a continuation of halfway points between the first wall (42) and the second wall (43);
when the clutch weight (25) is located in the first contact position (P1), as seen from the direction of the first axis (A2), the center point (C2) of the damper (35) is located on the center line (H) of the recess (41); and
when the clutch weight (25) is located in the origin position (P0), as seen from the direction of the first axis (A2), a distance between the center point (C2) of the damper (35) and the first wall (42) is shorter than a distance between the center point (C2) of the damper (35) and the second wall (43).

13. A straddled vehicle (1) comprising the centrifugal clutch (17) according to any one of claims 1 to 12.

## Patentansprüche

1. Eine Fliehkraftkupplung (17), die umfasst:
eine Antriebsplatte (21), die um eine erste Achse (A2) drehbar ist;
ein Schwenkelement (23), das durch die Antriebsplatte (21) gelagert ist;
ein Kupplungsgewicht (25), das durch das Schwenkelement (23) gelagert ist, so dass es um das Schwenkelement (23) schwenkbar ist;
ein Kupplungsgehäuse (31), das radial außerhalb der ersten Achse (A2) relativ zum Kupplungsgewicht (25) angeordnet ist, um das Kupplungsgewicht (25) berühren zu können,
einen Dämpfer (35), der durch die Antriebsplatte (21) gelagert ist;
wobei das Kupplungsgewicht (25) eine Aussparung (41) hat, die in der Lage ist, den Dämpfer (35) zu berühren; und
die Aussparung (41) enthält:
eine erste Wand (42), die in der Lage ist, den Dämpfer (35) zu berühren; und
eine zweite Wand (43), die sich in einer Position befindet, die der ersten Wand (42) zugewandt und von der ersten Wand (42) beabstandet ist, um mit dem Dämpfer (35) berühren zu können; und
wobei der Dämpfer (35) in einem Raum (S) angeordnet ist, der zwischen der ersten Wand (42) und der zweiten Wand (43) gebildet ist, **dadurch gekennzeichnet, dass**, von der Richtung der ersten Achse (A2) aus gesehen, die Aussparung (41), einen ersten Bogen (Q) kreuzt, der sich auf den Mittelpunkt (C1) des Schwenkelements (23) zentriert und durch den Mittelpunkt (C2) des Dämpfers (35) in einem Urzustand verläuft, und zumindest eine der ersten Wand (42) und der zweiten Wand (43) den ersten Bogen (Q) kreuzt.

2. Die Fliehkraftkupplung (17) gemäß Anspruch 1, **dadurch gekennzeichnet, dass** die Aussparung (41), von der Richtung der ersten Achse (A2) aus gesehen, eine Mittellinie (H) hat, die aus einer Fortsetzung von Punkten der Mittelhalbierenden zwischen der ersten Wand (42) und der zweiten Wand (43) besteht; und
von der ersten Achse (A2) aus gesehen, kreuzt die Mittellinie (H) den ersten Bogen (Q).

3. Die Fliehkraftkupplung (17) gemäß Anspruch 1 oder 2, **dadurch gekennzeichnet, dass**, in Richtung der ersten Achse (A2) gesehen, die Aussparung (41) geradlinig verläuft; und
in der Richtung der ersten Achse (A2) gesehen, die Aussparung (41) einen Winkel (θ) größer als 0 Grad mit einer ersten Tangente (T) bildet, die den ersten Bogen (Q) in einer Position des Dämpfers (35) berührt, vorzugsweise, in der Richtung der ersten Achse (A2) gesehen, der Winkel (θ), der zwischen der Aussparung (41) und der ersten Tangente (T) gebildet ist, 90 Grad oder weniger ist.

4. Die Fliehkraftkupplung (17) gemäß irgendeinem der Ansprüche 1 bis 3, **dadurch gekennzeichnet, dass**, wenn die Drehzahl der Antriebsscheibe (21) Null ist, das Kupplungsgewicht (25) in einer Ursprungsposition (P0) ist, in der das Kupplungsgewicht (25) keine Berührung mit dem Kupplungsgehäuse (31) hat;
das Kupplungsgewicht (25), durch Schwenken um das Schwenkelement (23), konfiguriert ist, um sich aus der Ursprungsposition (P0) in eine erste Kontaktposition (P1) zu bewegen, um das Kupplungsgehäuse (31) zu berühren;
eine Richtung der Bewegung um das Schwenkelement (23) von der Ursprungsposition (P0) zur ersten Kontaktposition (P1) als erste Richtung (N1) bezeichnet wird;
eine Richtung der Bewegung um das Schwenkelement (23) von der ersten Kontaktposition (P1) zur Ursprungsposition (P0) als zweite Richtung (N2) bezeichnet wird;
wenn das Kupplungsgewicht (25) aus der ersten Kontaktposition (P1) in die erste Richtung (N1) schwenkt, die Aussparung (41) den Dämpfer (35) in der ersten Richtung (N1) zusammendrückt und der Dämpfer (35) die Aussparung (41) in die zweite Richtung (N2) schiebt; und
wenn das Kupplungsgewicht (25) aus der ersten Kontaktposition (P1) in die zweite Richtung (N2) schwenkt, die Aussparung (41) den Dämpfer (35) in die zweite Richtung (N2) zusammendrückt, und der Dämpfer (35) die Aussparung (41) in die erste Richtung (N1) schiebt.

5. Die Fliehkraftkupplung (17) gemäß Anspruch 4, **dadurch gekennzeichnet, dass**, wenn das Kupplungsgewicht (25) in der Ursprungsposition (P0) ist, die Aussparung (41) den Dämpfer (35) in der zweiten Richtung (N2) zusammendrückt und der Dämpfer (35) die Aussparung (41) in die erste Richtung (N1) schiebt.

6. Die Fliehkraftkupplung (17) gemäß Anspruch 1 und 4 oder 5, **dadurch gekennzeichnet, dass**, wenn das Kupplungsgewicht (25) aus der ersten Kontaktposition (P1) in die erste Richtung (N1) schwenkt, die zweite Wand (43) den Dämpfer (35) in der ersten Richtung (N1) zusammendrückt und der Dämpfer (35) die zweite Wand (43) in die zweite Richtung (N2) schiebt; und
wenn das Kupplungsgewicht (25) aus der ersten Kontaktposition (P1) in die zweite Richtung (N2) schwenkt, die erste Wand (42) den Dämpfer (35) in die zweite Richtung (N2) zusammendrückt, und der Dämpfer (35) die erste Wand (42) in die erste Richtung (N1) schiebt.

7. Die Fliehkraftkupplung (17) gemäß Anspruch 6, **dadurch gekennzeichnet, dass**, wenn das Kupplungsgewicht (25) aus der ersten Kontaktposition (P1) in die erste Richtung (N1) schwenkt, die Kraft der zweiten Wand (43) beim Zusammendrücken des Dämpfers (35) in die erste Richtung (N1) zunimmt, und die Kraft (F) des Dämpfers (35) beim Schieben der zweiten Wand (43) in die zweite Richtung (N2) zunimmt; und
wenn das Kupplungsgewicht (25) aus der ersten Kontaktposition (P1) in die zweite Richtung (N2) schwenkt, die Kraft der ersten Wand (42) beim Zusammendrücken des Dämpfers (35) in die zweite Richtung (N2) zunimmt, und die Kraft (E) des Dämpfers (35) beim Schieben der ersten Wand (42) in die erste Richtung (N1) zunimmt.

8. Die Fliehkraftkupplung (17) gemäß Anspruch 6 oder 7, **dadurch gekennzeichnet, dass**, wenn das Kupplungsgewicht (25) aus der ersten Kontaktposition (P1) in die erste Richtung (N1) schwenkt, die Kraft der ersten Wand (42) beim Zusammendrücken des Dämpfers (35) in die zweite Richtung (N2) abnimmt, und die Kraft (E) des Dämpfers (35) beim Schieben der ersten Wand (42) in die erste Richtung (N1) abnimmt; und
wenn das Kupplungsgewicht (25) aus der ersten Kontaktposition (P1) in die zweite Richtung (N2) schwenkt, die Kraft der zweiten Wand (43) beim Zusammendrücken des Dämpfers (35) in der ersten Richtung (N1) abnimmt, und die Kraft (F) des Dämpfers (35) beim Schieben der zweiten Wand (43) in der zweiten Richtung (N2) abnimmt.

9. Die Fliehkraftkupplung (17) gemäß irgendeinem der Ansprüche 6 bis 8, **dadurch gekennzeichnet, dass**, wenn das Kupplungsgewicht (25) in der ersten Kontaktposition (P1) ist, die erste Wand (42) und die zweite Wand (43) jeweils den Dämpfer (35) berühren.

10. Fliehkraftkupplung (17) gemäß irgendeinem der Ansprüche 6 bis 9, **dadurch gekennzeichnet, dass**, wenn das Kupplungsgewicht (25) in der ersten Kontaktposition (P1) ist, die erste Wand (42) den Dämpfer (35) in der zweiten Richtung (N2) zusammendrückt, der Dämpfer (35) die erste Wand (42) in die erste Richtung (N1) schiebt, die zweite Wand (43) den Dämpfer (35) in die erste Richtung (N1) schiebt, und der Dämpfer (35) die zweite Wand (43) in die zweite Richtung (N2) schiebt.

11. Die Fliehkraftkupplung (17) gemäß irgendeinem der Ansprüche 6 bis 10, **dadurch gekennzeichnet, dass**, wenn das Kupplungsgewicht (25) in der Ursprungsposition (P0) ist, die erste Wand (42) den Dämpfer (35) in der zweiten Richtung (N2) zusammendrückt und der Dämpfer (35) die erste Wand (42) in der ersten Richtung (N1) schiebt.

12. Die Fliehkraftkupplung (17) gemäß irgendeinem der Ansprüche 6 bis 11, **dadurch gekennzeichnet, dass**
die Aussparung (41), von der Richtung der ersten Achse (A2) aus gesehen, eine Mittellinie (H) hat, die aus einer Fortsetzung von Punkten der Mittelhalbierenden zwischen der ersten Wand (42) und der zweiten Wand (43) besteht;
wenn das Kupplungsgewicht (25) in der ersten Kontaktposition (P1) ist, aus der Richtung der ersten Achse (A2) gesehen, der Mittelpunkt (C2) des Dämpfers (35) auf der Mittellinie (H) der Aussparung (41) liegt; und
wenn das Kupplungsgewicht (25) in der Ursprungsposition (P0) ist, aus der Richtung der ersten Achse (A2) gesehen, ist ein Abstand zwischen dem Mittelpunkt (C2) des Dämpfers (35) und der ersten Wand (42) kürzer als ein Abstand zwischen dem Mittelpunkt (C2) des Dämpfers (35) und der zweiten Wand (43).

13. Ein Spreiz-Sitz-Fahrzeug (1), das eine Fliehkraftkupplung (17) gemäß irgendeinem der Ansprüche 1 bis 12 umfasst.

## Revendications

1. Embrayage centrifuge (17) comprenant :
une plaque d'entraînement (21) pouvant tourner autour d'un premier axe (A2),
un élément de pivot (23) supporté par la plaque d'entraînement (21),
une masselotte d'embrayage (25) supportée par l'élément de pivot (23) pour pouvoir basculer autour de l'élément de pivot (23),
un carter d'embrayage (31) situé radialement vers l'extérieur du premier axe (A2) par rapport à la masselotte d'embrayage (25) pour pouvoir entrer en contact avec la masselotte d'embrayage (25),
un amortisseur (35) supporté par la plaque d'entraînement (21),
dans lequel la masselotte d'embrayage (25) présente un évidement (41) pouvant entrer en contact avec l'amortisseur (35), et
l'évidement (41) inclut :
une première paroi (42) pouvant entrer en contact avec l'amortisseur (35), et
une seconde paroi (43) située en face de la première paroi (42) et espacée de la première paroi (42) pour pouvoir entrer en contact avec l'amortisseur (35), et
où l'amortisseur (35) est situé dans un espace (S) formé entre la première paroi (42) et la seconde paroi (43), **caractérisé en ce que**, comme on peut le voir depuis la direction du premier axe (A2), l'évidement (41) croise un premier arc (Q) centré sur le centre (C1) de l'élément de pivot (23) et traversant naturellement le centre (C2) de l'amortisseur (35), et
au moins l'une de la première paroi (42) et de la seconde paroi (43) croise le premier arc (Q).

2. Embrayage centrifuge (17) selon la revendication 1, **caractérisé en ce que** l'évidement (41), comme on peut le voir depuis la direction du premier axe (A2), comporte un axe central (H) constitué d'une suite de points médians entre la première paroi (42) et la seconde paroi (43), et
comme on peut le voir depuis la direction du premier axe (A2), l'axe central (H) croise le premier arc (Q).

3. Embrayage centrifuge (17) selon la revendication 1 ou la revendication 2, **caractérisé en ce que**, comme on peut le voir depuis la direction du premier axe (A2), l'évidement (41) se déploie linéairement, et
comme on peut le voir depuis la direction du premier axe (A2), l'évidement (41) forme un angle (θ) supérieur à 0 degré avec une première ligne tangente (T) qui est en contact avec le premier arc (Q) dans une certaine position de l'amortisseur (35), de préférence, comme on peut le voir depuis la direction du premier axe (A2), l'angle (θ) formé entre l'évidement (41) et la première ligne tangente (T) vaut 90 degrés ou moins.

4. Embrayage centrifuge (17) selon l'une quelconque des revendications 1 à 3, **caractérisé en ce que**, lorsque le régime de rotation de la plaque d'entraînement (21) est nul, la masselotte d'embrayage (25) se trouve dans sa position d'origine (P0) dans laquelle la masselotte d'embrayage (25) n'est pas en contact avec le carter d'embrayage (31),
la masselotte d'embrayage (25), en basculant autour de l'élément de pivot (23), est configurée pour ce déplacer depuis la position d'origine (P0) jusqu'à une première position de contact (P1) pour entrer en contact avec le carter d'embrayage (31),
le sens de mouvement autour de l'élément de pivot (23) depuis la position d'origine (P0) jusqu'à la première position de contact (P1) est appelé un premier sens (N1),
le sens de mouvement autour de l'élément de pivot (23) depuis la première position de contact (P1) jusqu'à la position d'origine (P0) est appelé un second sens (N2),
lorsque la masselotte d'embrayage (25) bascule dans le premier sens (N1) depuis la première position de contact (P1), l'évidement (41) comprime l'amortisseur (35) dans le premier sens (N1) et l'amortisseur (35) pousse l'évidement (41) dans le second sens (N2), et
lorsque la masselotte d'embrayage (25) bascule dans le second sens (N2) depuis la première position de contact (P1), l'évidement (41) comprime l'amortisseur (35) dans le second sens (N2) et l'amortisseur (35) pousse l'évidement (41) dans le premier sens (N1).

5. Embrayage centrifuge (17) selon la revendication 4, **caractérisé en ce que**, lorsque la masselotte d'embrayage (25) est située à sa position d'origine (P0), l'évidement (41) comprime l'amortisseur (35) dans le second sens (N2) et l'amortisseur (35) pousse l'évidement (41) dans le premier sens (N1).

6. Embrayage centrifuge (17) selon la revendication 1 et les revendications 4 ou 5, **caractérisé en ce que**, lorsque la masselotte d'embrayage (25) bascule dans le premier sens (N1) depuis la première position de contact (P1), la seconde paroi (43) comprime l'amortisseur (35) dans le premier sens (N1) et l'amortisseur (35) pousse la seconde paroi (43) dans le second sens (N2), et
lorsque la masselotte d'embrayage (25) bascule dans le second sens (N2) depuis la première position de contact (P1), la première paroi (42) comprime l'amortisseur (35) dans le second sens (N2) et l'amortisseur (35) pousse la première paroi (42) dans le premier sens (N1).

7. Embrayage centrifuge (17) selon la revendication 6, **caractérisé en ce que**, lorsque la masselotte d'embrayage (25) bascule dans le premier sens (N1) depuis la première position de contact (P1), la force de la seconde paroi (43) augmente lors de la compression de l'amortisseur (35) dans le premier sens (N1) et la force (F) de l'amortisseur (35) augmente lors de la poussée de la seconde paroi (43) dans second sens (N2), et
lorsque la masselotte d'embrayage (25) bascule dans le second sens (N2) depuis la première position de contact (P1), la force de la première paroi (42) augmente lors de la compression de l'amortisseur (35) dans le second sens (N2) et la force (E) de l'amortisseur (35) augmente lors de la poussée de la première paroi (42) dans le premier sens (N1).

8. Embrayage centrifuge (17) selon la revendication 6 ou la revendication 7, **caractérisé en ce que**, lorsque la masselotte d'embrayage (25) bascule dans le premier sens (N1) depuis la première position de contact (P1), la force de la première paroi (42) diminue lors de la compression de l'amortisseur (35) dans le second sens (N2) et la force (E) de l'amortisseur (35) diminue lors de la poussée de la première paroi (42) dans le premier sens (N1), et
lorsque la masselotte d'embrayage (25) bascule dans le second sens (N2) depuis la première position de contact (P1), la force de la seconde paroi (43) diminue lors de la compression de l'amortisseur (35) dans le premier sens (N1) et la force (F) de l'amortisseur (35) diminue lors de la poussée de la seconde paroi (43) dans le second sens (N2).

9. Embrayage centrifuge (17) selon l'une quelconque des revendications 6 à 8, **caractérisé en ce que**, lorsque la masselotte d'embrayage (25) est située sur la première position de contact (P1), la première paroi (42) et la seconde paroi (43) sont respectivement en contact avec l'amortisseur (35).

10. Embrayage centrifuge (17) selon l'une quelconque des revendications 6 à 9, **caractérisé en ce que**, lorsque la masselotte d'embrayage (25) est située sur la première position de contact (P1), la première paroi (42) comprime l'amortisseur (35) dans le second sens (N2), l'amortisseur (35) pousse la première paroi (42) dans le premier sens (N1), la seconde paroi (43) comprime l'amortisseur (35) dans le premier sens (N1) et l'amortisseur (35) pousse la seconde paroi (43) dans le second sens (N2).

11. Embrayage centrifuge (17) selon l'une quelconque des revendications 6 à 10, **caractérisé en ce que**, lorsque la masselotte d'embrayage (25) est située à sa position d'origine (P0), la première paroi (42) comprime l'amortisseur (35) dans le second sens (N2) et l'amortisseur (35) pousse la première paroi (42) dans le premier sens (N1).

12. Embrayage centrifuge (17) selon l'une quelconque des revendications 6 à 11, **caractérisé en ce que** l'évidement (41), comme on peut le voir depuis la direction du premier axe (A2), comporte un axe central (H) constitué d'une suite de points médians entre la première paroi (42) et la seconde paroi (43),
lorsque la masselotte d'embrayage (25) est située sur la première position de contact (P1), comme on peut le voir depuis la direction du premier axe (A2), le centre (C2) de l'amortisseur (35) est situé sur l'axe central (H) de l'évidement (41), et
lorsque la masselotte d'embrayage (25) est située à sa position d'origine (P0), comme on peut le voir depuis la direction du premier axe (A2), la distance entre le centre (C2) de l'amortisseur (35) et la première paroi (42) est plus courte que la distance entre le centre (C2) de l'amortisseur (35) et la seconde paroi (43).

13. Véhicule à selle (1) comportant l'embrayage centrifuge (17) conforme à l'une quelconque des revendications 1 à 12.
